# EUROPEAN PATENT SPECIFICATION

(11) **EP 4 054 944 B1**
(45) Date of publication and mention of the grant of the patent: **02.12.2026**
(21) Application number: 20885563.5
(22) Date of filing: 06.11.2020
(51) Int. Cl.: B65D 37/00, A45C 3/00, A45C 7/00, A61B 50/30, B65D 33/20, B65D 65/14, B65D 75/20, B65D 75/28

(54) **IMMOBILIZING FLEXIBLE ROLL-UP CONTAINER**
IMMOBILISIERUNG FLEXIBLER ROLLCONTAINER
RÉCIPIENT À ENROULEMENT FLEXIBLE POUR IMMOBILISATION

(30) Priority: 08.11.2019 US 201916678917
(43) Date of publication of application: 14.09.2022
(73) Proprietor: Universal Tech Corporation, Ettrick, WI 54627 (US)
(72) Inventor: KRIESEL, Matthew Wayne, Melrose, WI 54642 (US); GOODENOUGH, Troy Bradley, Mindoro, WI 54644 (US)
(74) Representative: Barker Brettell LLP
(86) International application number: PCT/US2020/059554
(87) International publication number: WO 2021/092501

(56) References cited:
- US-A- 3 389 784
- US-A- 3 944 069
- US-A- 4 682 691
- US-A- 5 538 132
- US-A- 5 795 834
- US-A1- 2019 002 623
- US-A1- 2019 002 623
- US-B1- 9 713 324

## Description

### TECHNICAL FIELD

The present invention relates to flexible containers equipped to immobilize stowed items from movement, and more particularly to such containers which can be securely rolled-up or otherwise folded upon themselves in a generally front-to-back configuration, and subsequently unrolled or unfolded for subsequent usage.

### BACKGROUND OF THE INVENTION

Throughout time, flexible vessels have been used as convenient stowage containers for a host of items. Flexible stowage containers are often provided in a bag form, and can optionally be fitted with carrying handles. Certain other flexible stowage containers are provided in a roll-up or hanging bag form, and are typically fitted with straps or strings to secure such containers in a rolled-up configuration. Such flexible containers can be equipped with compartments or divisions (often referred to as "pockets") sized to fit the dimensions and shapes of specific items stowed therein. However, such pocketed flexible stowage containers are typically only useful for the specific stowable items for which the flexible stowage container was designed.

An advantage of roll-up containers resides in their compact stowing size when in a rolled-up configuration. Exemplary roll-up containers include roll-up dump pouches, such as hunting and fishing roll-up bag containers, tool bags, mini first aid kits, kitchenware holders (*e.g.,* flatware, knives, silverware, etc.), hanging roll-up bags (*e.g.,* for cosmetics, toiletries, jewelry, etc.), roll-up medical and EMT bags, military roll-up bags, hanging sales display containers, roll-up transporting containers, and the like. Often, such flexible containers are fabricated with clear plastic pockets designed to visibly reveal the particular stowed items. Exemplary thereof are roll-up wrench holders fitted with transparent plastic pockets sized to match a particular wrench size. Unfortunately, under common usage, the compartmentalized sections are prone to deterioration and thus lose their functionality to effectively restrain the stowed items in proper order.

There exists a need for a flexible container which can more effectively immobilize stowed items while also retaining substantially all of the desirable flexible attributes of a conventional flexible stowage container. Further benefits would be achieved if it were possible to immobilize a stowable item without necessitating a specially designed restraint element for each particular item desired to be stowed therein. Flexible containers equipped to immobilize a vast array of stowable items irrespective of item size, shape, and weight would also represent a significant advance within the flexible container art. Further advantages would be accomplished if such a flexible container provided antipathogenic properties, washable attributes and/or possessed virtually unlimited reuse. It would also be of great advantage to provide a roll-up flexible container which would not require a securing member (*e.g*., strings, straps, etc.) to secure and maintain the container in a rolled-up configuration.

There also exists a need for a flexible container which can more effectively immobilize stowed items while also retaining substantially all of the desirable flexible attributes of a conventional flexible stowage container. There exists a further need for such container to comprise transparent properties such that the contents within the container can be viewed, including without opening the container. Such transparent flexible containers would be useful in venues such as airports, athletic arenas, schools, etc. Further advantages would be accomplished if such transparent flexible containers provided antipathogenic properties, washable attributes and/or possessed virtually unlimited reuse. It would also be of great advantage to provide such transparent rolled-up flexible containers in a form which would not require a securing member (*e.g*., strings, straps, etc.) to secure and maintain the container in a rolled-up configuration.

It is evident that there clearly exists a long-standing need for a more effective flexible stowing container, especially within the field of roll-up or hanging types of flexible containers. Definitive advantages would be accomplished if it were possible to eliminate the need for tailor-made retaining pockets specifically adapted to retain only one specific item. Significant advantages would also be achieved if there existed a roll-up or hanging container having a universal capacity to restrain virtually any stowed item irrespective of its dimensions, weight or shape. Additional advantages would arise if the restraining system did not require tying strings or straps to maintain the container in a rolled-up form. Further advantages would arise if the restraining system would cohesively release the stowed item without leaving any unwanted residue upon the released item. Additional advantages would arise if the restraining system could be repeatedly reused without deterioration in restraining efficacy and/or have an ability to fully restore its restraining capacity by simple washing. Even further advantages over existing roll-up and hanging containers would be achieved if the containers possessed viscoelastomeric, adhesive and/or antipathogenic properties.

US 9,713,324 B1 discloses a flexible storage apparatus adapted for storing fishing articles comprising a mounting pad adapted for detachably receiving hooks and a second material substantially resistant to hook penetration, the materials being rollable into a compact, substantially cylindrical shape. At least one securing member is required to encircle a diameter of the storage apparatus and secure the apparatus in the cylindrical shape.

US 2019/0002623 A1 discloses a stabilized storage container possessing cohesive and adhesive properties to adhesively engage and release a stowable item, comprising a supportive base and a container insert consisting essentially of a cohesive and adhesive thermoset viscoelastomeric reaction product.

### SUMMARY OF THE INVENTION

In response, the invention of the present disclosure solves one or more of the problems and/or needs discussed above. More particularly, one or more of the aforementioned desired advantages, as well as other unexpected advantages, can be achieved by replacing the current pocket restraining systems of flexible or hanging containers with a viscoelastomeric, cohesive, adhesive and releasable thermoset polymer overlay disposed upon a front side of a flexible supportive base substrate, the combination of which tenaciously adhesively restrains stowed items until needed. In addition, the container combination can be rolled or folded upon itself in a front side to backside (*i.e.*, front-to-back) manner to form a securely closed immobilizing flexible roll-up container combination which will not unroll or unfold on its own. Subsequently, the container combination can be intentionally unrolled or unfolded by a user to access the stowed items, wherein such stowed items will substantially remain in their original stowed position within the container. In addition, excluding external factors such as dust accumulation, the inventive flexible roll-up container combination can be continuously reused without any substantial degradation of its adhesive, cohesive and releasability properties. However, should external factors (*e.g*., dust accumulation) occur, the flexible roll-up container combination can be cleansed via washing, such as hand washing in a solution of water and dish detergent, to restore the adhesive, cohesive and releasability properties back to their original state. Furthermore, the flexible roll-up container combination has also been found to be antipathogenic, thus providing yet additional advantages over conventional flexible containers.

The adhesive overlay possesses cohesive release properties, which upon application of a sufficient opposing removal force, releases an adhered item from the container combination, desirably leaving substantially no polymeric residue upon the item. As noted above, the container combination can possess antipathogenic properties, and thus can effectively alleviate the creation of an environment conducive to microbial growth. In addition, the overlay can help to secure and maintain the flexible container in a rolled-up configuration, without the need for a retaining member (*e.g.*, straps, strings, hook-and-loop, etc.). The adhesive characteristics of the overlay may be tailored to adhesively suit a particular stowed item for which the flexible roll-up or hanging container is designed, or it may be tailored to adhesively suit a multiplicity of different items. Difficult to store small items (*e.g.*, screws, nuts, coins, etc.) may easily be stored and retrieved in a readily accessible form with the inventive flexible roll-up container combination.

According to the invention, the flexible roll-up container combination comprises a flexible supportive base having a front side and a backside, and a cohesive, adhesive and releasable viscoelastomeric thermoset overlay disposed upon the front side of the flexible supportive base, where the container combination can be rolled or folded in a front-to-back manner into a securely closed configuration, the container combination being held in the securely closed configuration by adherence of the viscoelastomeric thermoset overlay to the backside of the flexible supportive base, and where the container combination can be unrolled or unfolded into an open configuration for subsequent use without discernable detachment of the viscoelastomeric thermoset overlay from the front side of the flexible supportive base. The overall attachment force of the viscoelastomeric thermoset overlay to the front side of the flexible supportive base is greater than the adhesive attachment force of the viscoelastomeric thermoset overlay to the backside of the flexible supportive base.

In a preferred embodiment, the flexible roll-up container combination is in the form of a flexible substrate. In other aspects, the flexible roll-up container combination is in the form of a bag. In still other aspects, the flexible roll-up container combination is in the form of a hanging container.

In some aspects of the preferred embodiment, at least one of the viscoelastomeric thermoset overlay or flexible supportive base is transparent.

In some aspects of the preferred embodiment, the viscoelastomeric thermoset overlay has a thickness of about 0.1 mm to about 10 mm.

In some aspects of the preferred embodiment, the front side of the flexible supportive base is at least partially impregnated with the viscoelastomeric thermoset overlay, and the backside of the flexible supportive base is substantially free of the viscoelastomeric thermoset overlay.

In some aspects of the preferred embodiment, the viscoelastomeric thermoset overlay comprises:
a) about 1 wt% to about 10 wt% isocyanate prepolymer;
b) about 35 wt% to about 70 wt% polyols comprising straight chain linking polyols and crosslinking polyols;
c) about 10 wt% to about 50 wt% epoxidized triglyceride plasticizer; and
d) about 0 wt% to about 40 wt% ester plasticizer;
where the viscoelastomeric thermoset overlay further comprises a straight chain linking polyol to crosslinking polyol weight ratio of about 4:1 to about 1:4. In some aspects, the plasticizer is uniformly dispersed throughout the viscoelastomeric thermoset overlay. In other aspects, the viscoelastomeric thermoset overlay further comprises an epoxidized triglyceride plasticizer to ester plasticizer weight ratio of about 1:0 to about 1:1. In still other aspects, the ester plasticizer is selected from the group consisting of sebacates, dipates, glutarates, dibenzoates, phthalates, terephthalates, azelates, and combinations thereof. In some further aspects, the ester plasticizer comprises dibutyl sebacate. In yet other aspects, the ester plasticizer has a molecular weight of less than about 750. In still other aspects, the ester plasticizer has a dipole moment of at least about 1.5 D.

In some further aspects, the flexible roll-up container combination is transparent.

In some further aspects, the straight chain linking polyols and crosslinking polyols each have repetitive ether groupings. In other aspects, the straight chain linking polyols comprise polyether diols and the crosslinking polyols comprise polyether triols. In still other aspects, the straight chain linking polyols and the crosslinking polyols each have a molecular weight of about 1,000 to about 20,000.

In some further aspects, the isocyanate prepolymer is a diisocyanate prepolymer.

In some aspects of the preferred embodiment, the viscoelastomeric thermoset overlay is characterized as having a sufficient adhesiveness to retain an item disposed thereon against displacement via gravity and to release the item upon exertion of a removal force without discernable detachment of the viscoelastomeric thermoset overlay from the front side of the flexible supportive base.

In some aspects of the preferred embodiment, the viscoelastomeric thermoset overlay has been bonded to the front side of the flexible supportive base via *in situ* curing.

In some aspects, the flexible roll-up container combination is characterized as being reusable.

In some aspects of the preferred embodiment, the flexible roll-up container combination is characterized as being cleansable via hand washing with a solution of water and dish detergent such that the cohesive, adhesive and releasability properties of the viscoelastomeric thermoset overlay substantially return to their original state.

In some aspects of the preferred embodiment, the flexible roll-up container combination is characterized as being antipathogenic.

In some aspects of the preferred embodiment, the viscoelastomeric thermoset overlay comprises a sufficient adhesive attraction to immobilize a stowed item placed in adhesive contact with the viscoelastomeric thermoset overlay, and the viscoelastomeric thermoset overlay further comprises a sufficient cohesive releasability to detach the stowed item upon an application of a removal force sufficient to overcome the adhesive attraction.

In some aspects of the preferred embodiment, an item detached from the flexible roll-up container combination is substantially free from residual polymer.

According to the invention, a method for preparing a flexible roll-up container combination comprises:
a) providing a flexible supportive base having a front side and a backside, where the flexible supportive base is of a sufficient size and structural integrity to support a desired stowable item;
b) disposing a thermoset viscoelastomeric reaction product upon the front side of the flexible supportive base to form a viscoelastomeric thermoset overlay disposed thereupon;
c) rolling or folding the flexible roll-up container combination upon itself in a front-to-back manner to form a closed configuration;
   wherein the container combination is held in the closed configuration by adherence of the viscoelastomeric overlay to the backside of the flexible supportive base; and
d) unrolling or unfolding the flexible roll-up container combination to form an open container, wherein the flexible roll-up container combination exhibits no discernable detachment of the viscoelastomeric thermoset overlay from the front side of the flexible supportive base;
where the viscoelastomeric thermoset overlay is bonded to the flexible supportive base by a thermoset bonding of the thermoset viscoelastomeric reaction product to the front side of the flexible supportive base or by an adhesive bonding of the viscoelastomeric thermoset overlay to the front side of the flexible supportive base, and where the viscoelastomeric thermoset overlay possesses adhesive, cohesive and releasability properties sufficient to retain a desired stowable item at a stabilized stowable position to form a stowed item, and to release the stowed item by application of a removal force sufficient to overcome the adhesive attraction between the stowed item and the viscoelastomeric thermoset overlay to form a removed item, and wherein the flexible supportive base is configured such that an overall attachment force of the viscoelastomeric thermoset overlay to the front side of the flexible supportive base is greater than an adhesive attachment force of the viscoelastomeric thermoset overlay to the backside of the flexible supportive base.

In some aspects of the preferred method embodiment, the method further comprises rolling or folding the flexible roll-up container combination upon itself in a front-to-back manner to form a closed configuration. In further aspects, the method further comprises unrolling or unfolding the flexible roll-up container combination to form an open container, where the flexible roll-up container combination exhibits no discernable detachment of the viscoelastomeric thermoset overlay from the front side of the flexible supportive base. In still further aspects, the adhesive, cohesive and releasability properties remain substantially intact upon such unrolling or unfolding.

In some aspects of the preferred method embodiment, the removed item exhibits no more than a nominal amount of a polymeric residue from the viscoelastomeric thermoset overlay.

In some aspects of the preferred method embodiment, the disposing step comprises disposing a reaction media which forms the thermoset viscoelastomeric reaction product onto the front side of the flexible supportive base and then curing the reaction media *in situ.* In other aspects, the disposing step comprises adhesively disposing a cured layer of the thermoset viscoelastomeric reaction product upon the front side of the flexible supportive base.

In some aspects of the preferred method embodiment, at least one of the viscoelastomeric thermoset overlay or flexible supportive base is transparent.

In some aspects of the preferred method embodiment, the thermoset viscoelastomeric reaction product is derived from a reaction media comprising:
a) about 1 wt% to about 10 wt% diisocyanate prepolymer
b) about 35 wt% to about 70 wt% polyols comprising straight chain linking diols and crosslinking triols; and
c) about 10 wt% to about 55 wt% plasticizer comprising about 10-percent to about 50 percent by weight of the reaction media of epoxidized triglyceride plasticizer and about 0-percent to about 40-percent by weight of the reaction media of ester plasticizer;
where the diols and triols each have repetitive ether groupings, and where the reaction media further comprises a diol to triol weight ratio of about 4:1 to about 1:4.

In some aspects, the reaction media further comprises an epoxidized triglyceride plasticizer to ester plasticizer weight ratio of about 1:0 to about 1:1. In other aspects, the ester plasticizer has a molecular weight of less than about 750 and a dipole moment of at least about 1.5 D. In still other aspects, the epoxidized triglyceride plasticizer comprises epoxidized soybean oil. In yet other aspects, the ester plasticizer comprises dibutyl sebacate. In still other aspects, the straight chain linking diols comprise polyether diol and the crosslinking triols comprise polyether triol, where the polyether diol and the polyether triol each have a molecular weight of about 1,000 to about 20,000. In yet other aspects, the amount of plasticizer within the reaction media is sufficient to provide a viscoelastomeric thermoset overlay possessing sufficient adhesiveness to stabilize the stowed item from unintentional displacement. In still other aspects, the amount of plasticizer within the reaction media is sufficient to provide a viscoelastomeric thermoset overlay possessing sufficient cohesiveness to prevent degradation of the viscoelastomeric thermoset overlay upon application of a removal force to the stowed item.

Numerous other features and advantages of the present invention will appear from the following description. In the description, reference is made to exemplary embodiments of the invention. Such embodiments do not represent the full scope of the invention. Reference should therefore be made to the claims herein for interpreting the full scope of the invention. In the interest of brevity and conciseness, any ranges of values set forth in this specification contemplate all values within the range and are to be construed as support for claims reciting any sub-ranges having endpoints which are real number values within the specified range in question. By way of a hypothetical illustrative example, a disclosure in this specification of a range of from 1 to 5 shall be considered to support claims to any of the following ranges: 1-5; 1-4; 1-3; 1-2; 2-5; 2-4; 2-3; 3-5; 3-4; and 4-5, and fractions thereof.

### BRIEF DESCRIPTION OF THE DRAWINGS

The foregoing and other features, aspects and advantages of the present invention will become better understood with regard to the following description, appended claims and accompanying drawings, which are not necessarily drawn to scale, where:
Figure 1A is a perspective view showing an inventive flexible roll-up container combination of the present disclosure in an open configuration comprising an overlay at least partially disposed upon the front side of a flexible supportive base substrate;
Figure 1B is a cross-sectional view showing the inventive flexible roll-up container combination of Figure 1A as taken along line A-A;
Figure 1C is a side view showing the inventive flexible roll-up container combination of Figure 1A in a closed configuration;
Figure 2 is a perspective view showing an inventive flexible roll-up container combination of the present disclosure in an open configuration comprising an overlay disposed upon substantially an entire front side surface of a flexible supportive base substrate;
Figure 3A is a perspective view showing an inventive flexible roll-up container combination of the present disclosure in an open configuration comprising an overlay at least partially disposed upon the front side of a flexible supportive base substrate, and further comprising a protective covering disposed at least upon the overlay;
Figure 3B is a cross-sectional view showing the inventive flexible roll-up container combination of Figure 3A as taken along line B-B;
Figure 3C is a side view showing the inventive flexible roll-up container combination of Figure 3A in a closed configuration;
Figure 4A is a perspective view showing an inventive flexible roll-up container combination of the present disclosure in an open configuration comprising an overlay at least partially disposed upon the front side of a flexible supportive base substrate and having toiletry and cosmetic items adhered thereto;
Figure 4B is a side view showing the inventive flexible roll-up container combination of Figure 4A in a closed configuration;
Figure 5A is a top view showing an inventive flexible roll-up container combination of the present disclosure in an open configuration comprising an overlay at least partially disposed upon the front side of a flexible supportive base substrate, and further comprising an optional retaining member in the form of a strap, and having ammunition and firearm accessories adhesively stowed upon the overlay;
Figure 5B is a perspective view showing the inventive flexible roll-up container combination of Figure 5A in a closed configuration;
Figure 6A is a perspective view of an inventive flexible roll-up container combination of the present disclosure in an open configuration comprising an overlay at least partially disposed upon the front side of a flexible supportive base substrate, and further comprising optional enclosure panels;
Figure 6B is a perspective view showing the inventive flexible roll-up container combination of Figure 6A in a closed configuration;
Figure 7A is a perspective view showing an inventive flexible roll-up container combination of the present disclosure in the form of a transparent container in an open configuration comprising a transparent overlay at least partially disposed upon the front side of a transparent flexible supportive base substrate, and further comprising items adhesively stowed thereupon;
Figure 7B is a perspective view showing the inventive transparent flexible roll-up container combination of Figure 7A in a closed configuration; and
Figure 8 is a top view showing an inventive flexible roll-up container combination of the present disclosure in an open configuration comprising multiple overlays disposed upon a front side base layer of a multilayered flexible supportive base, wherein the backside base layer is folded over onto the front side base layer and secured thereto by stitching.

Repeated use of reference characters in the present specification and drawings is intended to represent the same or analogous features or elements of the present invention.

### DEFINITIONS

It should be noted that, when employed in the present disclosure, the terms "a" and "an" are intended to mean "at least one" of any stated features, elements, integers, steps, components, or groups and are not intended to be limited to only one of such features, elements, integers, steps, components, or groups thereof, except where specifically stated as such. In addition, use of the phrase "at least one" is not intended to render other uses of the terms "a" or "an" to be limited to only one of a feature, element, integer, step, component, or group.

It should be noted that, when employed in the present disclosure, the terms "comprises," "comprising" and other derivatives from the root term "comprise" are intended to be open ended terms that specify the presence of any stated features, elements, integers, steps, components, or groups, and are not intended to preclude the presence or addition of one or more other features, elements, integers, steps, components, or groups thereof.

As used herein with respect to the viscoelastomeric thermoset overlay, the terms "adhesive" and "adhesiveness" refer to the overlay exhibiting tackiness to which a compatible item will stick or hold fast.

As used herein, the term "catalytic amount" is a term of the art, which is recognized by persons having ordinary skill in the art, and refers to an amount that is enough to obtain a desired response.

As used herein with respect to the viscoelastomeric thermoset overlay, the terms "cohesive" and "cohesiveness" refer to exhibiting a molecular attraction by which the molecules of the overlay are united throughout the mass such that the overlay retains its structural integrity when adhesively subjected to separating forces.

As used herein, the term "flexible" means capable of being bent into a cylinder or other folded form and subsequently unbent into a laid-flat state without degradation thereof.

As used herein, the term "reaction media" refers to an uncured mixture of constituents, which upon curing, forms the viscoelastomeric thermoset overlay of the present invention.

As used herein, the term "reaction product" refers to a resulting product obtained upon curing the reaction media from which the viscoelastomeric thermoset overlay of the present invention is derived.

As used herein with respect to the viscoelastomeric thermoset overlay, the terms "releasable" and "releasability" refers to the setting free from restraint or disengagement of an item from the overlay.

As used herein with respect to the flexible roll-up container combination, the term "roll-up" refers to the rolling or otherwise folding of the container combination upon itself in a generally front-to-back configuration.

As used herein with respect to the flexible roll-up container combination, the terms "secure" and "securely" refer to the container combination remaining in a closed (i.e., rolled or folded) configuration without opening (i.e., unrolling or unfolding) on its own.

As used herein with respect to the flexible roll-up container combination, the term "transparent" refers to having the property of transmitting light without appreciable scattering so that items disposed within are at least partially visible from the outside such that the items can be substantially discerned.

The terms "viscoelastomeric" and "viscoelastic" can be used interchangeably herein to refer to a substance having viscous and elastic properties.

These terms may be defined with additional language in the remaining portions of the specification.

### DETAILED DESCRIPTION - Best Mode(s) - Industrial Applicability

The invention is generally directed to inventive flexible roll-up containers comprising flexible base substrates which are at least partially overlayed with a cohesive, adhesive and releasable viscoelastomeric thermoset overlay. Such inventive containers can exhibit unique viscoelastic, adhesive, cohesive, releasability, cleansability, and/or antipathogenic properties.

The unique flexible roll-up container combinations of the present invention are provided by incorporating a unique adhesive, cohesive, releasable, antimicrobial, cleansable and reusable viscoelastomeric thermoset polymer component in the form of a viscoelastomeric thermoset overlay onto a front side surface, preferably an exterior surface, of a flexible base substrate so as to operationally interface with and engage a surface of an item disposed thereupon. In one preferred embodiment, a particularly effective viscoelastomeric thermoset overlay component is derived from a thermoset reaction product prepared from a thermosetting reaction media comprising a substantially uniform admixture of from about 1-percent to about 10-percent by weight (wt%) of an isocyanate prepolymer, from about 35 wt% to about 70 wt% polyols with said polyols consisting of straight chain linking polyols (*e.g.,* diols) and crosslinking polyols (*e.g.,* triols), each preferably having repetitive ether groups at a straight chain linking polyol to crosslinking polyol weight ratio (*e.g.*, a diol to triol weight ratio) ranging from about 4:1 to about 1:4, and from about 20 wt% to about 55 wt% plasticizer containing less than about 50 wt% (with respect to the total reaction media weight) of an epoxidized triglyceride plasticizer and from about 0 wt% to about 40 wt% (with respect to the total reaction media weight) of an ester plasticizer, wherein the plasticizer is preferably uniformly and cohesively dispersed and bound throughout the reaction product. Typically, the useful straight chain linking polyols and crosslinking polyols will be comprised of liquid polyethers having a molecular weight of about 1,000 to about 20,000.

Although several exemplary embodiments of the present invention will be described herein, it should be understood that the disclosed embodiments are intended merely as non-limiting examples of the invention that may be embodied in various forms. Therefore, specific details disclosed herein, such as relating to composition, structure, function, and the like, are not to be interpreted as limiting in any manner whatsoever, but rather only as one of numerous example bases for claims and/or teaching persons having ordinary skill in the art to variously employ the present invention in virtually any appropriately detailed structure or circumstance.

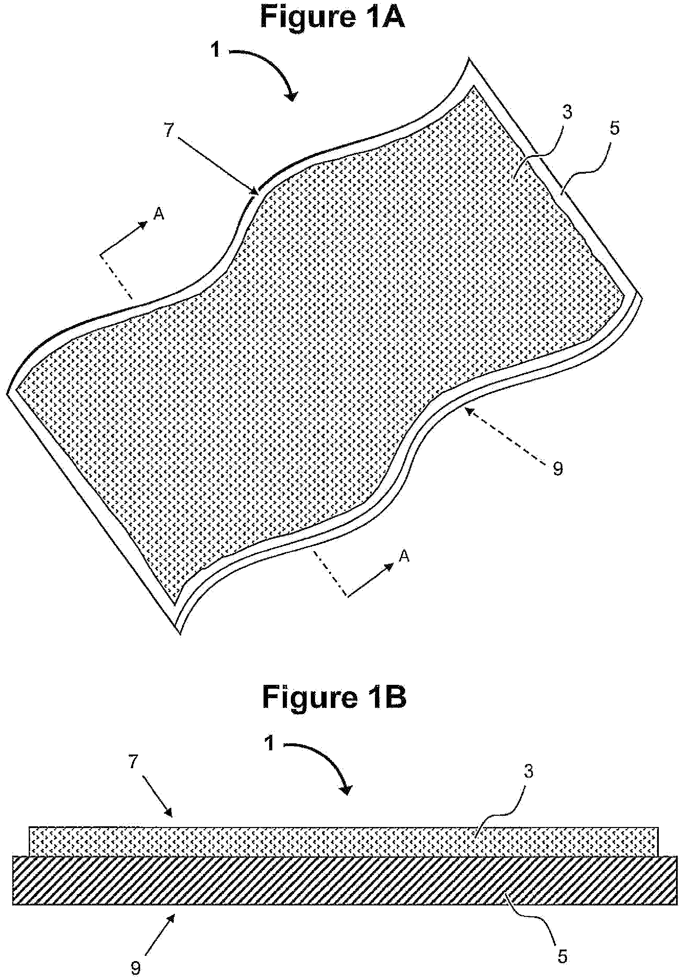

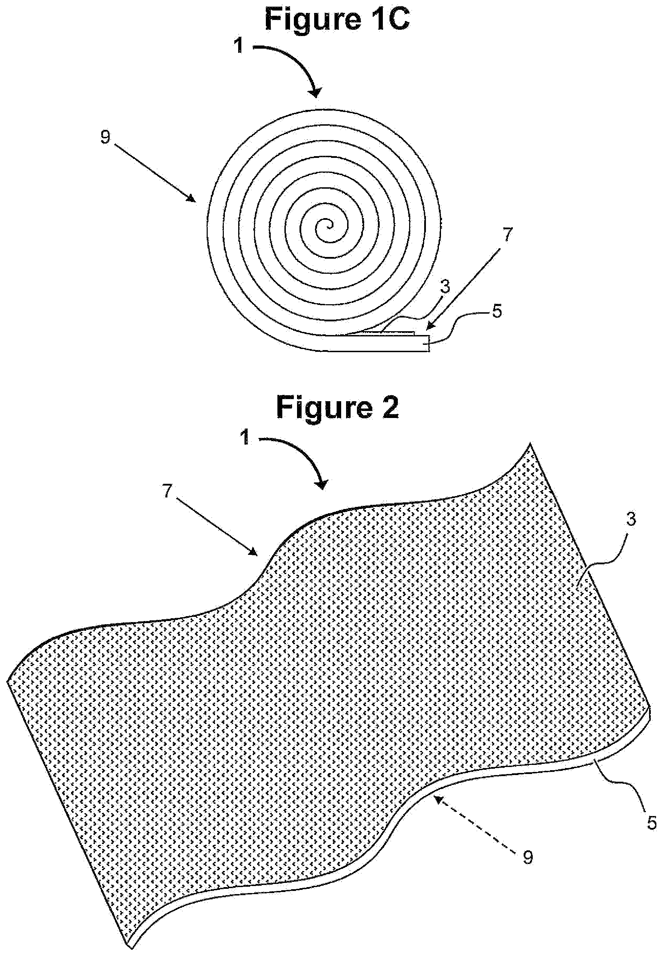

The invention may be better understood with reference to the Figures. Referring to Figures 1A-8, the present invention provides a flexible roll-up container combination **1** comprising a flexible supportive base substrate **5** (also referred to herein as a "flexible supportive base," or more simply as a "base") equipped with a cohesive and releasably adhesive viscoelastomeric thermoset overlay **3** (also referred to herein more simply as an "overlay") which serves to adhesively immobilize stowed items **13** adhering thereto until intentionally removed therefrom.

Continuing with Figures 1A-8, the flexible roll-up container combination **1** of this invention comprises a flexible supportive base **5.** The flexible supportive base **5** comprises a front side **7** upon which the viscoelastomeric overlay **3** is disposed, and an opposing backside **9** distal to the front side **7.** The flexible supportive base **5** provides the basic container structural support for the container combination **1,** including the supportive structure for the overlay **3.**

In general, the base **5** may have any desired shape (*e.g*., rectangular, square, trapezoidal, triangular, circular, oval, random, etc.) and can be appropriately sized to accommodate a particular stowed item **13** or group of stowed items. For example, in one non-limiting exemplary embodiment, the base **5** can have a generally rectangular shape having length and width dimensions of less than about 100 cm and 50 cm, respectively, such as less than 30 cm and 10 cm, respectively, or less than 10 cm and 7 cm, respectively. However, such non-limiting embodiment can have length and width dimensions which are greater than 100 cm and 50 cm, respectively, without departing from the scope of the invention. Similarly, the base **5** will have a thickness which may be uniform or non-uniform. There is no particular limit to the thickness, provided that the base **5** remains flexible and/or performs as intended by the user. For example, in one non-limiting exemplary embodiment, the base **5** can have a thickness of less than about 100 mm, such as about 1 mm to about 50 mm, or about 5 mm to about 10 mm. However, the base **5** can have a thickness that is less than about 1 mm or greater than about 100 mm without departing from the scope of the invention.

The flexible supportive base **5** may be comprised of any flexible natural or synthetic material useful in providing a suitable flexible supportive base **5** for a desired flexible roll-up container combination **1** herein. More particularly, the flexible supportive base **5** can be comprised of a host of flexible materials which provide an embedding or adhesive attraction to the viscoelastomeric overlay **3,** and may be provided as a film, sheet, fabric or any other flexible material supportive of the overlay **3,** as well as of any items **13** intended to be contained thereby. In addition, the base **5** can be provided in a single sheet form or as a multi-layered or composite material form. Examples of materials which can be suitable as a flexible supportive base **5** include, but are not limited to, natural, synthetic and fabricated materials such as polyesters, polyethylene, polypropylene, nylon, rayon, Dacron, manila, polyethylene terephthalate, polyamides, polyurethane, linen, wool, cashmere, jute, polyacetates, polyacrylics, spandex, latex, orlon, cellulose, cotton, silk, velvet, canvas, leather, fiberglass, acrylonitrile-butadiene-styrene polymers, polystyrene, metallic foils, as well as a host of other such flexible synthetic and/or natural substances which can engage or embed the overlay **3,** as well as combinations thereof.

Desirably, the front side **7** *(i.e.,* the side upon which the overlay **3** is disposed) surface of such flexible supportive base **5** materials has an overall attachment affinity to the viscoelastomeric thermoset overlay **3** which is greater than the adhesive affinity of the overlay to any items **13** intended to be stowed by the flexible roll-up container combination **1.** Alternatively, the front side **7** surface of the base **5** material can have a relatively lower adhesive affinity towards the overlay **3** (as compared to any items **13** to be stowed), provided however that the front side **7** of the base **5** material comprises suitable anchoring sites (*e.g*., porous or woven flexible materials) such that the resultant overall attachment force between the front side **7** of the base **5** material and the overlay **3** is greater than the adhesive force between the overlay **3** and any items **13** to be stowed thereby. Persons having ordinary skill in the art will recognize that the precise attachment force between the overlay **3** and the front side **7** of the base **5** material will vary depending upon numerous factors, such as the surface properties of the base **5** material(s), the properties of the viscoelastomeric overlay **3** and the surface properties of the items **13** to be stowed, for example. Accordingly, a flexible base **5** material wherein the overall attachment force of the overlay **3** to the base **5** material is less than the overall adhesive force of the overlay **3** to an item **13** to be stowed thereby would not be a suitable material for providing the front side **7** of the base **5** of the inventive container combination **1.**

Similarly, in aspects where the container combination **1** is intended to be at least partially rolled-up or otherwise folded upon itself (*see e.g.,* Figures 1C, 3C, 4B, 5B, 6B and 7B), it is desirable that the front side **7** of the base **5** material has an overall attachment force to the viscoelastomeric thermoset overlay **3** which is greater than the overall adhesive force between the overlay **3** and the backside **9** of the base **5** material. Persons having ordinary skill in the art will recognize that the precise attachment force between the overlay **3** and the front side **7** of the base **5** material and the precise adhesive force between the overlay **3** and the backside **9** of the base **5** material will vary depending upon numerous factors, such as the surface properties of the front side **7** and backside **9** of the base **5** material(s), the type of attachment of the overlay **3** to the front side **7** of the base **5** material (*e.g.,* adhesive bonding, *in situ* curing), the presence of anchoring sites versus a smooth surface, and the like, for example.

Continuing with Figures 1A-8, the inventive flexible roll-up container combination **1** also comprises a viscoelastomeric thermoset overlay **3**. In its most basic form, the viscoelastomeric thermoset overlay **3** comprises a prepolymer (*e.g*., a glycol prepolymer), a crosslinking polyol (*e.g.,* a triol), a straight chain linkage polyol (*e.g.,* a diol) and a plasticizer (*e.g.,* an epoxidized plasticizer). The viscoelastomeric thermoset overlay **3** can further comprise other additives as well, such as additional plasticizers, catalysts, colorants, UV inhibitors, scents, and the like, without departing from the scope of the invention.

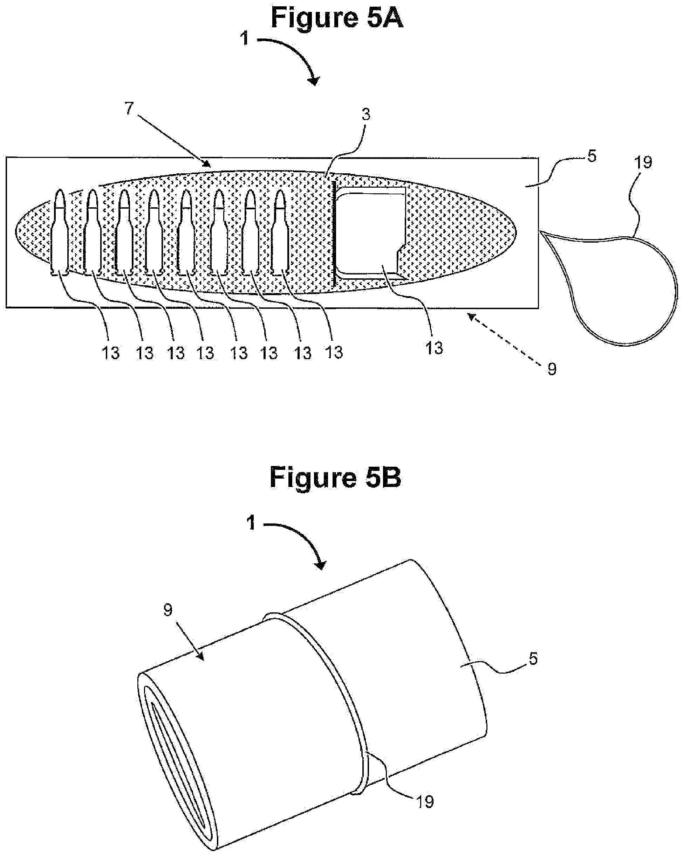

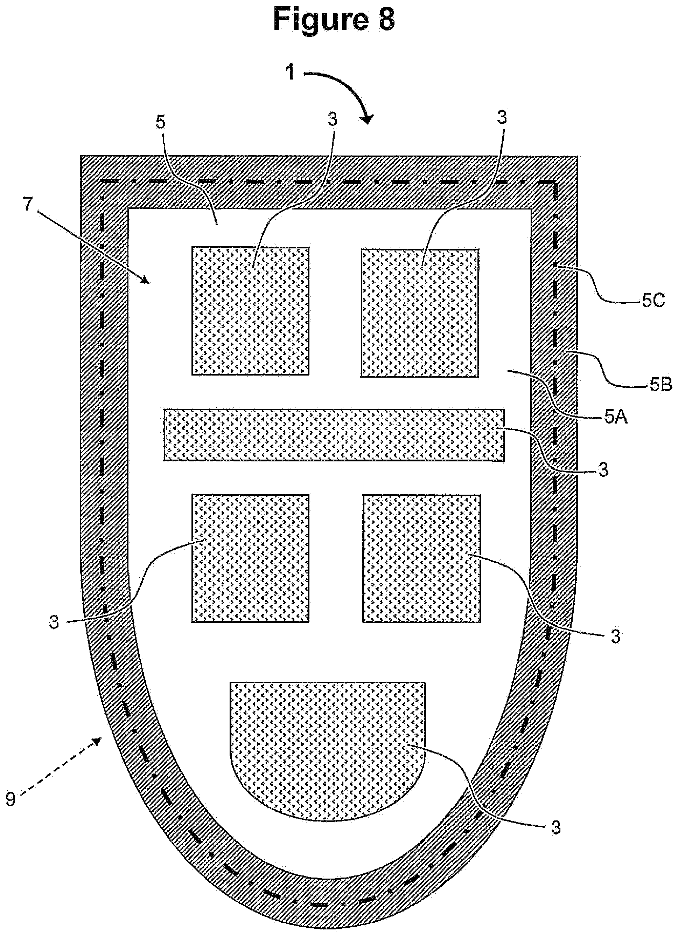

In general, the inventive viscoelastomeric thermoset overlay **3** may be appropriately sized to accommodate a particular container combination **1** and/or its stowed item(s) **13**. For example, the overlay **3** may have any desired shape (*e.g*., rectangular, square, trapezoidal, triangular, circular, oval, random, etc.), and will typically have a similar shape to the flexible supportive base **5**, though it need not be (*compare e.g.,* Figures 1A and 5A). Likewise, the dimensions of the overlay **3** will typically be equal to or less than the dimensions of the flexible supportive base **5**. However, an overlay **3** can also be greater than the base **5** in one or more dimensions without departing from the scope of the invention. In addition, the flexible roll-up container combination **1** can comprise a single overlay **3** or multiple overlays **3** without departing from the scope of the invention (*see e.g.,* Figure 8).

Similarly, the viscoelastomeric thermoset overlay **3** will have a thickness which may be uniform or non-uniform. There is no particular limit to the thickness, provided that the overlay **3** remains flexible and/or performs as intended by the user. For example, in one non-limiting exemplary embodiment, an adhesively applied overlay **3** (*i.e.*, wherein a prefabricated overlay **3** is applied to a flexible supportive base **5**) can have a thickness of less than about 10 mm, such as less than about 5 mm, or less than about 3 mm, or about 0.5 mm to about 10 mm in thickness, to provide the desired cohesiveness and adhesiveness for stabilizing stowed items **13** against movement. In another non-limiting exemplary embodiment wherein the overlay **3** is in a thermoset bonded form (*i.e*., wherein the overlay thermosetting reaction media is first applied to a flexible supportive base **5** in liquid form and then cured *in situ*)*,* a lesser thickness of the viscoelastomeric thermoset overlay **3** may be effectively utilized, such as a thickness of less than about 8 mm, or less than about 4 mm, or less than about 1 mm, or about 0.1 mm to about 8 mm in thickness, to provide the desired cohesiveness and adhesiveness for stabilizing stowed items **13** against movement. It should be understood that thicker overlays **3** (*i.e.*, thickness greater than 10 mm and 8 mm, respectively) can also be utilized without departing from the scope of the invention, such as for stowing relatively heavier items **13** for example, but may be generally unnecessary.

It has been discovered that a unique thermosetting reaction media yields an inventive viscoelastomeric thermoset overlay **3** possessing unexpectedly superior properties for use in the flexible roll-up container combination **1** of this invention. Such thermosetting reaction media provides a polyurethane-based overlay **3** derived by reacting a polyisocyanate with a polyol. The thermosetting reaction media also includes a polarized organic plasticizer in prescribed amounts, as further discussed below. Particularly effective as a polarized plasticizer for use herein are epoxidized triglycerides, such as epoxidized vegetable oils, typically in amounts of less than about 50 wt% of the overall reaction media weight.

Desirably, the polyols of the thermosetting reaction media include straight chain linking polyol and crosslinking polyol reactants, such as straight chain linking polyether diols and crosslinking polyether triols, each having at least terminating functional groups, such as hydroxyl groups, (*e.g*., polyoxyethylene and/or polyoxypropylene diols and triols) typically of a molecular weight in excess of 1,000, such as a molecular weight of about 1,000 to about 20,000, in prescribed amounts, as further discussed below.

Providing an inventive overlay **3** having desired flexibility, cohesiveness, adhesiveness and releasability efficacy when used in the flexible roll-up container combinations **1,** such as depicted in Figures 1A-8, necessitates the preparation of a thermosetting reaction media precursor which provides a properly configured carbamate thermoset linkage (*e.g*., urethane). In general, the applicable thermosetting polyurethane precursor reaction media for preparing the overlay **3** includes a controlled amount of polyols (*e.g.,* diols and triols) reacted with a ring-opening species of a hardener (*e.g.,* amines, amides, mercaptans, anhydrides, polycyanates such as a diisocyanate, etc.). The ratio of polyol reactants, the amount and type of hardeners, the type of optional catalyst, the reaction temperatures, etc. are carefully monitored with an appropriate balance given to the straight chain linking polyol and crosslinking polyol reactants to create the necessary cross and linear thermoset linkages needed in combination with selective plasticizers and amounts thereof necessary to provide the stability, flexibility, cohesiveness, adhesiveness and releasability of the unique viscoelastomeric thermoset overlays **3** of this invention. Indeed, other reactants, catalysts, reaction temperatures and conditions causing an excessively cross-linked thermoset polymer coupled with insufficient straight chain bridging between the cross-linkage sites will fail to create an effective viscoelastomeric thermoset overlay **3** for use herein. The thermosetting reactants and conditions are thus selectively chosen so as to avoid excessive cross-linkage and create a thermoset polymer having an excessive glass transition temperature.

Reactants and reaction conditions which favor a more linear, cohesive and adhesive viscoelastomeric thermoset backbone structure receptive to effective polar plasticizer loading are particularly well-suited for providing the overlay **3.** Since a relatively greater exothermic reaction and/or more elevated curing temperature tends to create a relatively more rigid thermoset polymer, the reactants and reaction media conditions desirably utilize a comparatively slower reaction rate (*e.g*., via catalyst selection), a comparatively lower curing temperature, and a more controlled curing time, along with effective amounts of straight chain producing polyol to crosslinking polyol reactants (*e.g*., a diol to triol ratio) in combination with effective plasticizers in prescribed amounts (as discussed further herein), all of which factors are precisely controlled in order to effectuate the desired overlay **3** properties. Such carefully controlled reaction media conditions coupled with the proper reactants and plasticizers will accordingly provide a flexible reaction product (*i.e*., overlay **3**) having an effective quantum of straight chain linkages and cross-linkages resulting in a highly unique cohesive and releasable adhesive thermoset reaction product especially adapted for use as an overlay **3** herein.

The reactants are also suitably formulated so as to provide a thermosetting reaction media which can be effectively converted into an overlay **3** specifically adapted for use in the flexible roll-up container combination **1** of this invention. The resultant thermoset plasticized viscoelastomeric reaction product yields a labyrinth polymerizate structure which provides an overlay **3** having unexpectedly desirable cohesive and adhesive properties. The unique thermoset overlay **3** of the present invention can be further characterized as being a flexible viscoelastomeric thermoset polymer exhibiting low rebound velocity and hysteresis properties, in addition to its unexpectedly superior cohesiveness and adhesiveness. The desired overlay **3** flexibility allows the overlay **3** to suitably mate onto the flexible supportive base **5** and operate substantially harmoniously with the flexibility attributes of the base **5**. In some aspects, the overlay **3** can also possess outstanding memory attributes.

As referenced above, the viscoelastomeric thermoset overlay **3** comprises a thermosetting reaction media prepolymer which provides a properly configured carbamate thermoset linkage (*e.g*., urethane). Suitable prepolymers can include ring-opening species of a hardener (*e.g*., amines, amides, mercaptans, anhydrides, isocyanates including polyisocyanates such as a diisocyanate, etc.). In one non-limiting exemplary embodiment, the prepolymer is a polyisocyanate prepolymer. Suitable polyisocyanates include, but are not limited to, aromatic diisocyanates (*e.g*., diphenylmethane diisocyanate, methylene diphenyl diisocyanate (MDI) or toluene diisocyanate (TDI)) and aliphatic diisocyanates (*e.g*., hexamethylene diisocyanate (HDI) or isophorone diisocyanate (IPDI)) in a conventional prepolymer form. The prepolymer component of the thermosetting reaction media (and thus of the resulting viscoelastomeric thermoset overlay **3**) will typically be present in an amount of about 1 wt% to about 10 wt% of the total reaction media weight, such as about 2 wt% to about 9 wt%, or about 3 wt% to about 8 wt%, or about 4 wt% to about 7 wt% of the total reaction media weight.

As referenced above, the viscoelastomeric thermoset overlay **3** also comprises polyols. Typically, the overlay **3** will include a straight chain linkage polyol and a crosslinking polyol in a total amount of about 35 wt% to about 70 wt% of the total reaction media weight, wherein the straight chain linkage polyol to a crosslinking polyol weight ratio is about 4:1 to about 1:4. In some desirable embodiments, the straight chain linkage polyol will be in the form of a two-functional polyol (*i.e.*, a diol) and the crosslinking polyol will be in the form of a three-functional polyol (*i.e.*, a triol), such as polyether diol and polyether triol reactants, respectively (*e.g*., polyoxyethylene and polyoxypropylene diols and triols), for example. In such embodiments, the triols within the reaction media cause crosslinking within the resultant polymeric structure of the viscoelastomeric thermoset overlay **3** to occur by providing three available reactive functional groups (*e.g*., hydroxyl groups). In contrast, the diols within the reaction media provide uncrossed linkages (*i.e*., straight chain linkages) within the resultant polymeric structure of the viscoelastomeric thermoset overlay **3**. In some embodiments, certain stowable items **13** may necessitate a relatively lower adhesion level compared to other stowable items (*e.g.*, a relatively fragile stowable item **13** versus a more substantial stowable item **13**). Such a relatively lower adhesion level can be accomplished by utilizing a relatively higher triol content (*e.g*., a diol to triol ratio of about 1:4). In contrast, a comparatively higher diol content (*e.g.*, a diol to triol ratio of about 4:1) will provide a higher degree of adhesiveness, which may be better suited for comparatively heavier and/or more durable stowable items **13.**

Exemplary effective straight chain linking polyols and crosslinking polyols for the present invention include those having repetitive oxygen and hydrocarbyl groups of higher molecular chain lengths (*i.e*., molecular weight of at least about 1,000), such as polyethers equipped with polymerizable functional hydroxyl groupings. Suitable straight chain linking polyol reactants include polyether diols characteristically comprised of a straight polyether molecular chain having two terminal hydroxyl groups. Suitable crosslinking polyol reactants include polyether triols which characteristically have two terminal and one additional crosslinking reactive hydroxyl groups which provide the polyfunctional crosslinking sites in the thermosetting reaction media.

The straight chain linking polyols and crosslinking polyols, which can be especially useful in preparing the viscoelastomeric thermoset overlay **3** herein, are derived from oxygen containing hydrocarbyl polyols of a molecular weight of at least 1,000, and include those having repetitive oxygen containing functional groups, such as typically provided by polyester and polyether groupings. Due to the oxygen atoms' electronic need for electrons to satisfy its orbital needs, it appears that these repetitive internal oxygen-containing groupings of straight chain linkages (*e.g.,* diols) sandwiched between cross-linkages (*e.g.,* triols) provide ideal polarized enclaves for uniformly hosting a corresponding substantially polarized plasticizer concentration within the polymeric structure, all of which appears to collectively impart a synergistic cohesive and adhesive effect to the overlay **3.**

The straight chain linking polyether polyols and crosslinking polyether polyols are commercially available at various chain lengths, typically ranging from about 1,000 to about 20,000 molecular weight. The polyether polyols which are most suitable herein are those which are substantially liquid at room temperature (*i.e*., about 21 °C) and which typically have a molecular weight of less than about 20,000, such as less than about 15,000, or less than about 10,000. Since there exists definitive manufacturing advantages in maintaining fluidity during the initial mixing and prefabricating steps when applying the thermosetting reaction media to a flexible supportive base **5,** such polyols which are more fluid tend to be better suited for those applications wherein the overlay **3** penetrates into recessed or porous sections of the flexible supportive base **5.** In some preferred embodiments, straight chain linking polyether diol and crosslinking polyether triol reactants which are particularly effective for use herein include polyoxyethylene and polyoxypropylene diols and triols having a molecular weight generally ranging from about 1,000 and 20,000, more particularly such diols having a molecular weight of about 2,000 to about 6,000 and such triols having a molecular weight of about 1,000 to about 10,000, and most particularly such diols having a molecular weight of about 3,000 to about 5,000 and such triols having a molecular weight of about 2,000 to about 8,000, to provide a highly effective thermoset polymeric structure for housing the plasticizer in a highly effective cohesive and adhesive form.

As referenced above, care needs to be exercised regarding the extent of crosslinking, as well as the intervening polyoxyalkylene straight chain linkages separating the crosslinking sites. This is most effectively accomplished by retaining a diol to triol weight ratio content from about 4:1 to about 1:4, such as about 3:1 to about 1:3, or about 13:7 to about 7:13, or about 3:2 to about 2:3, so as to provide the necessary straight chain polyether linkage and cross-linkage infrastructure for the overlay **3.**

The basic viscoelastomeric reaction product molecular structure requires a unique cross-linked structure by controlling the diol to triol ratio (*e.g*., dihydroxy polyalkylene oxide to trihydroxy polyalkylene oxide) to create a thermoset viscoelastomer having a sufficient quantum of straight chain polyether linkages. The oxygen rich diol straight chains apparently serve to effectively separate the thermoset cross-linkage and become sandwiched between the crosslinking triol polymerizate linkages, creating unique plasticizer enclaves. The reduced level of triol cross-linkages (caused by the intermittently disposed straight chain diol linkages) does not alter the overall viscoelastic characteristics of the reaction product. Apparently, the controlled thermoset structure permeating throughout the reaction mass creates sites of a controlled polar density within the cross-linked polyether polymerizates interspersed amongst straight chain polyether bridges to provide a unique labyrinth structure, which apparently provides an appropriate polarity and entrapment for an effective loading of plasticizers (*e.g*., polarized plasticizers) therein. By establishing a viscoelastomeric molecular structure loaded with properly oriented and entrained plasticizers (*i.e.*, resulting in a non-bleeding polymer), the desired adhesive and cohesive release properties of the overlay **3** are thereby achieved. Countless enclaves of negatively charged straight chain diols and cross-linked triols appear to form a thermoset labyrinth loaded with the polarized plasticizer uniformly distributed throughout the reaction media and the cured reaction product. This unique polarized polymerizate infrastructure loaded with an effective amount of polarized plasticizer stacking within the reaction product labyrinth apparently creates a synergistic adhesive and cohesive reaction product effect.

As referenced above, the viscoelastomeric thermoset overlay **3** also comprises plasticizer, more preferably polarized plasticizer. Suitable plasticizers include those commonly known in the art as plastic plasticizers, and more particularly as PVC plasticizers. In some preferred embodiments, epoxidized triglyceride plasticizers have been found to be particularly effective. Amongst the epoxidized triglyceride plasticizers suitable for use herein are the epoxidized animal oils and vegetable oils. Typically, such epoxidized triglyceride plasticizers can be present in the reaction media at levels of about 10 wt% to about 50 wt% of the total reaction media weight, such as about 20 wt% to about 50 wt% of the total reaction media weight, or about 25 wt% to about 40 wt% of the total reaction media weight. In one non-limiting exemplary embodiment, effective application of the overlay **3** to a flexible supportive base **5** can be accomplished when the epoxidized triglyceride plasticizer content was about 25 wt% to about 35 wt% of the total thermosetting reaction media weight. It should be noted that since the weight of the resulting overlay **3** generally does not change from the weight of the reaction media during the curing process, the term "percent by weight of the total reaction media weight" is generally equivalent herein to the term "percent by weight of the overlay **3** weight" (and derivatives thereof).

In some preferred embodiments, epoxidized vegetable oils have been found to effectively serve as the plasticizer for the inventive viscoelastomeric thermoset overlay **3,** which in combination with the bridging straight chain polyether diol polymerizates, will unexpectedly create the desired flexibility, plasticization, releasability, cohesiveness and adhesiveness efficacy in the resultant cured viscoelastomeric thermoset overlay **3.** Particularly effective cohesive and adhesive properties are imparted to the overlay **3** when the epoxidized vegetable oil plasticizer concentration is maintained at less than about 50 wt% of the reaction media weight, such as less than about 45 wt%, or about 10 wt% to about 50 wt% of the total reaction media weight, providing especially enhanced adhesive and cohesive stability efficacy to the overlay **3.** In other embodiments, the epoxidized triglyceride plasticizer can be in the form of epoxidized vegetable oil, with amounts ranging from about 20 wt% to less than about 50 wt% of the total reaction media weight being highly effective for certain applications. Although the applicable epoxidized vegetable oil plasticizer may include a variety of epoxidized vegetable oils (*e.g.*, castor oil, corn oil, cotton seed oil, palm oil, safflower oil, linseed oil, soybean oil, coconut oil, olive oil, peanut oil, rapeseed oil, canola oil, etc.), it has been discovered herein that in some preferred embodiments, epoxidized soybean oils are particularly effective as the epoxidized triglyceride plasticizer component when preparing the reaction product to form the thermoset viscoelastomeric overlay **3.**

Although the viscoelastomeric thermoset structure is especially adapted to loading with a host of plasticizers, it has been found that polar plasticizers (*e.g.*, epoxidized triglycerides), which create a polar attraction between the oxygenated viscoelastomeric polymeric chain linkage and the plasticizer, are particularly desirable. This molecular electronic attraction apparently contributes to the unique adhesive and cohesive properties of the reaction product and the resultant overlay **3** therefrom. Since the plasticizers are not effectively loadable onto a cured thermoset viscoelastomer, the plasticizing reagents are necessarily uniformly incorporated into the thermosetting reaction media prior to curing, to provide a uniform and homogeneous polarized distribution thereof throughout its entire uncured composition. The thermosetting conditions of the reaction media apparently uniformly align and create a synergistic polar positioning and alignment between the polar attracting polymeric chain sections of the thermoset reactants and the plasticizer to provide a highly effective adhesive polarized plasticizer loading and alignment thereof within the resultant overlay **3.** This permits a tenacious and cohesive plasticizer loading without any evidence of plasticizer seepage or separation (*i.e*., plasticizer bleeding) from its hosting thermoset viscoelastomeric polymeric structure, as well as from the overlay **3** derived therefrom.

As referenced above, it has been discovered herein that epoxidized vegetable oils are particularly effective in providing the desired adhesiveness, cohesiveness and plasticization to the resulting viscoelastomeric thermoset overlay **3.** Such epoxidized vegetable oils can be particularly effective in contributing towards the desired flexible viscoelastic properties herein. In some aspects, an epoxidized vegetable oil may constitute the majority constituent by weight of the viscoelastomeric thermoset overlay **3** *(i.e.,* the greatest amount by weight of the total reaction media weight), but is desirably maintained at a level of less than about 50 wt% of the total uncured reaction media weight, such as about 25 wt% to about 45 wt% of the total reaction media weight, or about 30 wt% to about 40 wt% of the total reaction media weight.

In preparing an overlay **3** formulated with a vegetable oil, the reaction media typically includes a measured amount of a triglyceride component (*e.g*., epoxidized fatty triglycerides) with the triglyceride amounting to less than about 50 wt% of the total reaction media weight, along with an effective amount of the straight chain thermosetting component, such as provided by polyether diols. Surprisingly, by reducing the triglyceride plasticizer (*e.g.*, epoxidized triglyceride plasticizer) content and increasing a proportionate amount of the straight chain forming thermoset reactants, it has been found herein that the cured cohesiveness, tackiness (*i.e*., adhesiveness) and overall efficacy of the resultant overlay **3** can increase, even though the reaction media may still contain the triglyceride component (*e.g*., epoxidized soybean oil (ESO)) as the majority reaction media component by weight.

Compared to conventional high-plasticizer (*i.e*., greater than about 10 wt% plasticizer) thermoset formulations (which tend to bleed plasticizer), it has been discovered herein that increasing the compositional cohesiveness and adhesiveness of the overlay **3** while alleviating plasticizer bleeding can be accomplished with an epoxidized oil content of less than about 50 wt% of the total reaction media weight, coupled with a substantial decrease in the crosslinking polyol reactant, which leads to a reduction in cross-linkage and a concomitant increase in straight chain structure as provided by the straight chain producing polyol reactant. The polymeric molecular change within the thermoset reaction product (with or without the use of other conventional plastic plasticizers in addition to the epoxidized triglyceride plasticizer) apparently creates a localized intramolecular polarity charge which is effectively expressed by the unique oxygen containing viscoelastomeric polyether backbone structure intertwined within the cured reaction product mass, all of which leads to a highly effective polarized plasticizer loading, to yield an unexpectedly desirable viscoelastomeric adhesive and cohesive overlay **3** possessing highly effective release and non-bleeding properties. Accordingly, effective cohesive and adhesive efficacy for the overlay **3** can be achieved at a triglyceride plasticizer content ranging from about 10 wt% to less than about 50 wt% of the total reaction media weight.

In some aspects, the addition or substitution of at least some of the triglyceride plasticizer (*e.g.*, epoxidized triglycerides) with a viscosity reducing ester plasticizer can effectively maintain cohesiveness and adhesiveness of the overlay **3** while also providing excellent flexibility, releasability and stability properties. Certain polar ester plasticizers having a fluid consistency (*e.g*., liquid) at room temperature, and typically those of a relatively low molecular weight (*i.e*., a molecular weight of about 750 or less) can effectively contribute to exceptional working viscosities during the initial curing stages, rendering prefabrication of the reaction media into the desired overlay **3** much easier.

In some aspects, such lower molecular weight plasticizers (*e.g.*, ester plasticizers) can be effectively utilized to create a less viscous thermosetting reaction media (as compared to using epoxidized triglyceride plasticizer alone). For example, the addition, and/or partial substitution, of the epoxidized triglyceride plasticizer with a lower molecular weight ester plasticizer can significantly increase fluidity and workability of the thermosetting reactants, while also retaining other desirable thermoset attributes of the overlay **3.** Such ester plasticizers (particularly such lower weight ester plasticizers) coupled with a controlled straight chain linking polyol to crosslinking polyol weight ratio (*e.g*., diol to triol ratio), and in combination with the epoxidized triglyceride plasticizer, can be effectively utilized to provide a reaction media which will tenaciously cure and bond *in situ* to a host of flexible supportive bases **5**. For most such *in situ* curing applications, the weight ratio of epoxidized triglyceride plasticizer to ester plasticizer (if present) can generally range from about 8:1 to about 1:3, such as from about 4:1 to about 1:1. The molecular size, configuration, polarity, functional molecular groups, etc. of the thermosetting polymeric reactants, along with a combination of such lower molecular weight ester plasticizer, and the epoxidized vegetable oil in measured amounts (as prescribed herein) collectively contribute towards the creation of a viscoelastomeric thermoset overlay **3** possessing desired unique cohesive, adhesive and releasability properties.

As referenced above, the overlay **3** is desirably comprised of an effective amount of long chain polyether polymeric linkages coupled with the appropriate prepolymer (*e.g*., diisocyanate) and polyether polymeric cross-linkages to provide a polymeric chain of a desired polarity having an unexpectedly high affinity for a loading of polar plasticizing components within the thermoset viscoelastomeric reaction product infrastructure. In some desirable embodiments, the total plasticizer concentration (*i.e*., epoxidized and non-epoxidized plasticizers) can typically range from about 10 wt% to about 55 wt% of the total reaction media weight, such as about 20 wt% to about 50 wt% of the total reaction media weight, or about 25 wt% to about 45 wt% of the total reaction media weight. In some embodiments, when additional non-epoxidized plasticizers (*i.e.*, in addition to the epoxidized triglyceride plasticizers) are present, the weight ratio of epoxidized plasticizer to non-epoxidized plasticizer can desirably range from about 1:0 to about 1:1, such as from about 6:1 to about 3:1.

The selection of a particular non-epoxidized plasticizing agent, and its concentration, can have a pronounced viscosity effect during application of the thermosetting reaction media to a flexible supportive base **5.** For example, adding a suitable ester plasticizer (*e.g*., by reacting an alcohol with a fatty acid) to the reaction media can serve to lower the viscosity of the reaction media. In addition, certain of the ester plasticizers (*e.g*., dibutyl sebacate) may be effectively used to prepare a thermosetting reaction media which provides exceptional thermosetting viscosity characteristics, which in turn can, for example, render an uncured reaction media especially suitable for direct application to the flexible supportive base **5** and then curing *in situ.* Other suitable ester plasticizers can be derived from the ester condensation product of an alcohol (*e.g.*, C₁-C₁₈) with a polycarboxylic acid. Such ester plasticizers can be advantageously utilized in preparing a thermosetting reaction media which provides a thermoset viscoelastomeric reaction product having an adhesiveness tailor-made for a particular end use. For example, certain applications may require a tenacious adhesiveness (*e.g*., for securing a pipe wrench within the flexible roll-up container combination **1**), whereas other applications may require a comparatively milder adhesiveness (*e.g*., for securing a fragile item within the flexible roll-up container combination **1**).

In general, those plasticizers which are suitable as plasticizing agents for the plasticization of polyvinyl chlorides can be utilized as additional non-epoxidized plasticizers for the reaction media herein. In some aspects, the polar strength (often referred to as "dipole moment") of such ester plasticizers depends, to a certain degree, upon the alcohol condensation reactant chain length, which can also have an effect upon the adhesive characteristics of the thermoset viscoelastomeric reaction product. For example, non-epoxidized plasticizers having a relatively high dipole moment (*e.g.*, dibutyl sebacate, having a dipole moment of 2.48 debyes (D), as compared to epoxidized plasticizers having a dipole moment near 0 D) can be effective in retaining the desired properties of the polymerizate while also providing a thermosetting reaction media exhibiting a reduced working viscosity, which is particularly effective for use in permeating porous interstices or fabric structures of a flexible supportive base **5.** Illustrative of such additional non-epoxidized plasticizing agents include, but are not limited to, ester plasticizers, such as sebacates, adipates, terephthalates, dibenzoates, glutarates, phthalates, azelates, and the like. Such ester plasticizers may be effectively co-blended with the epoxidized triglyceride plasticizer(s) into the thermosetting reaction media, such as to create or modify the working viscosity of the reaction media. Ester plasticizers having a dipole moment of greater than 1.5 D, such as greater than 2.0 D, may be effectively utilized for this purpose. Illustrative ester plasticizing agents having a suitable dipole moment include dibutyl, dimethyl, and diethyl esters of sebacates, adipates, isophthalates, phathalates, maleates, azelates, and glutarates. It has been discovered herein that the incorporation of a lower molecular weight ester plasticizer *(i.e.,* a molecular weight of less than about 750, such as a polyalkylene ester plasticizer), in combination with the epoxidized triglyceride plasticizer, can accordingly be utilized to provide for effective penetration of the reaction media into a flexible supportive base **5** without adversely affecting the other unique properties of the overlay **3.**

One advantage of the inventive viscoelastomeric thermoset overlay **3** herein includes, *inter alia,* its ability to prevent seepage or bleed-out of the plasticizer, despite its relatively high plasticizer content (*i.e*., greater than about 10 wt%), which resolves a long-standing problem encountered by other polymers having similar plasticizer contents. In order to achieve a highly effective, stable, cohesive and adhesive overlay **3,** a proper proportional amount of cross-linkages and straight chain linkages is necessary. The thermoset polymeric structure of the overlay **3** necessitates a controlled quantum of crosslinked structure, along with a controlled quantum of intervening straight chain polar attracting linkages, to impart a highly flexible viscoelastomeric backbone chain of an appropriate polarity for the hosting of polarized plasticizers. This creates an intertwining backbone chain providing excellent attractive polar sites for the cohesive polar alignment of the plasticizing agent throughout the entire viscoelastomeric mass. Such an intertwining backbone chain comprising both crosslinking triols and straight chain linking diols helps prevent the plasticizers from bleeding-out of the viscoelastomeric thermoset overlay **3.**

Achieving adhesive and cohesive efficacy requires control between molecular cross-linkage and polar alignment of straight chain thermoset moieties of a bridging structure, as well as the content and type of plasticizer, within the thermosetting reaction media to create an overlay **3** exhibiting the unexpected attributes of the invention. It has been discovered herein that an excessively high triol reactant level and/or an insufficient plasticizer content can result in an overlay **3** that is undesirably firm and less tacky (*i.e.*, insufficient viscoelasticity and adhesiveness), while an excessively high diol reactant level can result in an overlay **3** which, upon contacting a stowable item **13**, becomes excessively bonded to the stowed item **13** (*i.e*., insufficient releasability). Through a judicious control of the plasticizer content and the straight chain linking polyol to crosslinking polyol weight ratios (*e.g.*, diol to triol ratios) as prescribed herein, a viscoelastomeric thermoset reaction product uniquely suited for use as an overlay **3** of the present invention can be achieved. In addition, it has been discovered herein that an appropriate plasticizer content, in combination with a sufficient amount of polyether diol, within the thermosetting reaction media serves to increase cohesiveness, tensile strength, softness and flexibility of the resultant overlay **3.** A prescribed polyether diol to polyether triol weight ratio, in combination with prescribed amounts of the plasticizer, provides a unique adhesive and cohesive stability which effectively allows the overlay **3** to functionally possess a desirable cohesive releasability towards stowed items **13,** even when such items **13** are stowed over prolonged time intervals (*e.g*., at least one year). It has also been discovered herein that the loading of the reaction media with a lower molecular weight polar plasticizer (*i.e*., less than a molecular weight of about 750) can permit for a reduction in epoxidized plasticizer content, which in combination with an appropriate amount of thermoset polyether straight chain linkages, can provide an overlay **3** possessing a desired stowing adhesiveness and cohesive releasability efficacy for use in the inventive flexible roll-up container combination **1** herein. In addition, the use of such lower molecular weight plasticizers can also provide a more fluid and workable curing reaction media, which may be more easily combined or bonded with the flexible supportive base **5** to provide the desired flexible roll-up container combination **1.**

As referenced above, the straight chain linking diols and crosslinking polyols (*e.g.*, triols) of an appropriate molecular weight (as discussed above) can effectively serve as straight chain building and crosslinking components, respectively, within the cured thermoset viscoelastomeric polymeric structure. When properly controlled, they provide a plasticizer friendly, non-bleeding viscoelastomeric polymeric structure of straight chain and crosslinked linkages of an appropriate polymerizate configuration and molecular polarity for effective plasticizer loading. In contrast to conventional polymers having similar plasticizer contents (*e.g*., impact absorbing polymers) which fail to retain plasticizer loading (and thus tend to leak plasticizer), the viscoelastomeric thermoset overlays **3** herein exhibit a high cohesiveness which is resistant to plasticizer leakage. The prescribed diol to triol weight ratio herein enables a controlled proportion of polarized plasticizing component loading to effectuate the superior adhesiveness, cohesiveness and releasability within the carefully structured thermoset reaction product, creating a polarized polymeric infrastructure which tenaciously traps and prevents plasticizer bleeding (*i.e*., leakage). To achieve the necessary plasticizing adhesive, cohesive and releasability efficacy, the straight chain diol precursors desirably have a relatively high polyether molecular weight (*e.g*., a molecular weight of about 2,000-20,000), which at an increased reaction media concentration, creates an effective linear thermoset polymeric polyoxy structure having an appropriate chain length, while also serving to substantially lessen the polymeric cross-linkage density. In general, the desired plasticizer retention and viscoelastomeric flexibility, along with the desired adhesiveness, cohesiveness and releasability, may accordingly be effectuated via interpolymerizing effective amounts of the thermosetting diols and triols of an appropriate chain length (*i.e*., a molecular weight of about 2,000-20,000), along with a thermosetting isocyanate (*e.g.*, diisocyanate) reactant and plasticizer cofactors at the appropriate reaction media amounts (as prescribed herein).

In general, the thermosetting viscoelastomeric reaction media is formulated with an appropriate level of crosslinking and straight chain reactants containing a sufficient amount of polarized plasticizer to create the unique highly cohesive and adhesive viscoelastomeric overlay **3.** A viscoelastomeric reaction media favoring a substantially lower cross-linkage, loaded with an effective amount of epoxidized vegetable oil plasticizer, has been found to unexpectedly dramatically increase the adhesiveness and cohesiveness of the overlay **3.** It has also been discovered that additional commonly used polarizing plasticizing agents, which are chemically unreactive with the viscoelastomeric reaction media reactants, can also be effectively used to impart a high degree of adhesiveness and cohesiveness to the reaction product. Such additional plasticizing agents, in conjunction with the epoxidized triglyceride plasticizer, can also be effectively used to impart enhanced tensile strength and softness to the viscoelastomeric thermoset overlay **3,** while also providing a thermosetting reaction media having a desirable viscosity and workability that is useful in the manufacture of the flexible roll-up container combination **1** equipped with the inventive overlay **3.**

Procedurally, the reaction product which forms the viscoelastomeric thermoset overlay **3** can be prepared from a thermosetting reaction media homogeneously loaded with plasticizer(s) which desirably includes an epoxidized triglyceride oil plasticizer (*i.e*., from about 10 wt% to about 50 wt% of the total reaction media weight), as well as any other effective polar plasticizer, coupled with a carefully measured molar ratio of crosslinking polyols to straight chain producing polyether diols to create the necessary bridging therebetween, and an isocyanate prepolymer hardener (*e.g*., diisocyanate, such as aliphatic, aromatic, heterocyclic, etc., polyisocyanates, and cycloaliphatic and arylaliphatic diisocyanates) in the presence of an appropriate catalyst (*e.g*., preferably a relatively slow-acting catalyst). The reaction media desirably contains the necessary plasticizer loading specifically adapted to provide a curable reaction media, which upon curing, produces a viscoelastomeric reaction product having a unique polymerizate structure effectively loaded with polar oriented plasticizers uniformly and homogeneously distributed throughout its entire thermoset mass, intertwined therewithin, and supported by the flexible plasticizer entrapping thermoset polymerizate structure. Suitable catalysts include tertiary amines, tertiary phosphines, strong bases (*e.g*., alkali, alkaline earth metal hydroxides, alkoxides, etc.) phenoxides, acidic metal salts of strong acids, metal chelates, metal alcoholates, metal phenolates, organic acid salts, organo metallic derivatives, etc. In one particular example, an organobismuth catalyst is utilized, available under the trade name COSCAT 83 (available from Vertellus Holdings LLC, having a place of business located in Zeeland, Michigan, USA). Under the most effective thermosetting and fabricating conditions, the thermosetting polymerizate precursors and the plasticizers are collectively provided in the reaction media as liquids at room temperature without necessitating the use of any solvents, other chemical dispersion aids or elevated temperatures, in order to homogeneously disperse the reaction media components. Accordingly, this allows the thermosetting reaction to be effectively conducted at room temperature.

Imparting desired flexibility, adhesive, cohesive and releasability characteristics to a viscoelastomeric thermoset overlay **3,** coupled with the compatibility of a secure bonding to the flexible supportive base **5,** may be effectively obtained by preparing a reaction media containing about 10 wt% to about 40 wt% of the total reaction media weight of a two functional polyether polyol (*e.g*., ELASTOCAST C-4057 polyether diol, available from BASF Corporation), about 10 wt% to about 40 wt% of the total reaction media weight of a three functional polyether polyol (*e.g*., ELASTOCAST C-4018 polyether triol, available from BASF Corporation), about 1 wt% to about 10 wt% of the total reaction media weight of methylene diphenyl diisocyanate-based glycol prepolymer (*e.g*., ELASTOCAST TQZ- P23 available from BASF Corporation, or ISONATE 2181 available from Dow Chemical Company, or RUBINATE 1790 available from Huntsman International LLC), an epoxidized soybean oil in an amount ranging from about 10 wt% to less than about 50 wt% of the total reaction media weight, along with an optional catalytic amount of a suitable catalyst (*e.g*., bismuth (3+) neodecanoate, such as COSCAT 83 available from Vertellus Holdings LLC) typically at a catalytic concentration ranging from about 0.1 wt% to about 0.6 wt% of the total reaction media weight.

In some preferred embodiments, the viscoelastomeric thermoset overlay **3** can be prefabricated prior to placement upon the front side **7** of the flexible supportive base **5.** This can be accomplished, *inter alia,* by disposing liquid reaction media *(i.e.,* uncured or partially cured) into a mold and then curing the reaction media to form the overlay **3,** or by pouring and curing a layer of the reaction media and then cutting strips from the layer to preform the overlay **3.** Other methods for preforming the overlay **3** as will be apparent to persons having ordinary skill in the art are also suitable without departing from the scope of the invention. In such embodiments, it is preferred that the adhesion force of the overlay **3** to the front side **7** of the flexible supportive base **5** is greater than the adhesion force of the overlay **3** to the backside **9** of the flexible supportive base **5,** thus allowing the flexible roll-up container combination **1** to be opened (*e.g*., unrolled) without detachment of the overlay **3** from the front side **7**. Accordingly, it is desirable that the surface properties of the front side **7** of the flexible supportive base **5** are different (*e.g*., is more porous and/or has more or anchoring sites) than the backside **9** such that the adhesive force of the overlay **3** to the front side **7** is greater than the adhesive force of the overlay **3** to the backside **9**. Alternatively, different materials can be utilized to form the front side **7** and backside **9** of the flexible supportive base **5** such that the adhesive force of the overlay **3** to the front side **7** is greater that the adhesive force of the overlay **3** to the backside **9**. One additional advantage of a prefabricated overlay is the ability for a user to remove the current overlay **3** from the flexible roll-up container combination **1** (*i.e.,* from the front side **7** of the flexible supportive base **5**) and to replace it with another overlay having the same or different properties (*e.g*., size, shape, thickness, adhesiveness, etc.).

In other preferred embodiments, the reaction media is disposed upon the front side **7** of the flexible supportive base **5** while in liquid form (*i.e.*, uncured or partially cured) and then allowed to cure *in situ* to the front side **7.** It has been observed that such *in situ* curing provides additional bonding forces (believed to be chemical bonding forces) in addition to the adhesive bonding force, thus allowing the flexible roll-up container combination **1** to be opened *(e.g.,* unrolled or unfolded) without detachment of the overlay **3** from the front side **7,** even when the material and surface properties of both the front side **7** and backside **9** of the flexible supportive base are substantially the same. In addition, as with the prefabricated overlay referred to above, a current overlay **3** formed by *in situ* curing of the reaction media upon the front side **7** of the flexible supportive base **5** can likewise be removed and replaced with another overlay, preferably a prefabricated overlay, having the same or different properties (*e.g*., size, shape, thickness, adhesiveness, etc.). However, removal of an overlay **3** formed by such *in situ* curing will be comparatively more difficult than the removal of a prefabricated overlay since the overall attachment force (*i.e*., bonding) is generally greater for an overlay formed by *in situ* curing (as compared to a prefabricated overlay produced using substantially the same formula).

It has been discovered herein that certain polymeric materials, such as halogenated polymers (*e.g.*, polyvinylchloride (PVC)) (except for special formulations) are generally adhesively incompatible with the adhesive properties of the inventive viscoelastomeric thermoset overlays **3** *(i.e.,* the overlay **3** does not adhere well to such materials). As a result, such incompatible materials can provide excellent release properties from the overlay **3,** which renders such incompatible materials particularly effective for use as a mold material which can be utilized to cure the overlay reactants and thus prefabricate the overlays **3.** However, it should be understood that if such incompatible materials have a porous or fabric structure, such porous or fabric structures can provide anchoring or penetration sites for the overlay **3,** thus rendering such materials to be unsuitable for use as a mold material (and therefore more suitable for use as a flexible supportive base **5** herein).

Where it is desirable to utilize thermosetting reactants which provide a workable viscosity range for the prefabrication of a cured reaction media into a useful overlay **3** form, those straight chain linking polyols (*e.g.,* diols) and crosslinking polyols (*e.g.,* triols), as well as plasticizers, which are generally fluid at room temperature can provide a workable thermosetting viscosity range to achieve this objective. The resultant thermoset overlay **3** having controlled cross-linkages and straight chain linkages, in combination with a controlled plasticizer content homogeneously distributed throughout the thermoset polymeric network, unexpectedly imparts desirable flexibility, adhesiveness, cohesiveness and releasability, all of which renders the viscoelastomeric thermoset reaction product of the reaction media to be exceptionally effective as an overlay **3** herein.

As reference above, in some desirable embodiments, the viscoelastomeric thermoset overlay **3** can be in the form of a prefabricated component. The adhesive and cohesive attributes of a prefabricated overlay **3** can permit for its adhesive attachment to a flexible supportive base **5.** Accordingly, films, sheets, pads, etc. of the overlay **3** may be directly adhesively secured to the front side **7** of a supportive base **5** to provide the flexible roll-up container combination **1** herein. This may be useful for certain applications, such as wherein it is desired to convert a conventional *(i.e.,* non-adhesive) flexible container (*e.g.,* a fabric, cellophane, a bag, etc.) into the flexible roll-up container combination **1** of this invention. Such conversion may be accomplished by adhesively applying a strip, film, pad, etc. of the overlay **3** to a front side **7** of the flexible substrate of conventional flexible containers. Such a procedure could even advantageously be utilized by consumers, wherein the consumer could first obtain the viscoelastomeric thermoset overlay **3** from a manufacturer, and then apply the overlay to a front side **7** of a flexible supportive base **5,** or other conventional flexible container to form a flexible roll-up container combination **1** of the present invention.

As referenced above, in other preferred embodiments, the viscoelastomeric thermoset overlay **3** can be formed directly upon a front side **7** of the flexible supportive base **5.** This can be accomplished, *inter alia,* by disposing liquid reaction media *(i.e.,* uncured or partially cured) upon a front side **7** surface of the flexible supportive base **5,** and then curing the liquid reaction media *in situ* to form an overlay **3** that is firmly bonded (*e.g.,* chemically and adhesively) to the base **5.** Although this may be procedurally impractical for household consumers to perform, it provides a highly effective means for manufacturing the flexible roll-up container combination **1** herein. Many synthetic and natural textiles, such as suede leather, foam, or the woven or knitted fabrics (*e.g*., aertex, aida, baize, batiste, birds eye, knit, bombazine, brocade, buckram, cable knit, calico, cambric, charmeuse, chenille, corduroy, casement, cheese cloth, cheviot, chiffon, chino, chintz, crepe, crewel, damask, denim, dimity, drill, double knit, duck or canvas, felt, fiberglass, filter, flannel, flat, or, jersey knit, fleece knit, foulard, fustian, gabardine, gauze, georgette, gingham, grey or greige, industrial, intarsia knit, interlock, stitch knit, jacquard knit, Kashmir, silk, khadi, khaki, lame, laminated, lawn, leno, linsey-woolsey, madras, madras, muslin, net, mousseline, muslin, narrow, organdy, organza, oxford, percale, plain, pointelle knit, poplin, purl knit, quilted, raschel knit, reflective, rib, stitch knit, satin or sateen, shantung, sheeting, sliver knit, taffeta, stretch, tartan, terry knitted, terry, cloth ticking, tissue, tricot knit, velour knitted, velvet, voile, warp knitted, whipcord, etc.) can provide exceptional flexible supportive base **5** anchoring sites for tenaciously anchoring the overlay **3** *in situ* to the front side **7.** For example, this may be accomplished by first applying an uncured or partially cured overlay thermosetting reaction media to a front side **7** of a fibrous flexible supportive base **5,** and then curing it while present on the flexible supportive base **5** to form the flexible roll-up container combination **1.** In some aspects, the uncured reaction media precursor for the overlay **3** may be suitably formulated so as to limit its penetration onto a porous or woven fabric structure of the flexible supportive base **5,** such as to prevent soak-through. Accordingly, upon curing, the overlay **3** becomes firmly anchored to the front side **7** surface of the supportive flexible base **5,** leaving the opposing backside **9** surface uncoated. Such anchoring of the overlay **3** to the front side **7** of the flexible supportive base **5** will tend to exhibit a higher attachment force to the flexible supportive base **5** as compared to merely adhering a prefabricated overlay **3** to the base **5** by virtue of the overlay's inherent adhesive properties. By combining the anchoring features of fabrics having anchoring sites (*e.g*., porous or fibrous fabrics), particularly those which possess an otherwise relatively low adhesive attraction towards the adhesive overlay 3, a flexible roll-up container combination 1 can be achieved which can be more easily rolled-up and unrolled without separation of the overlay 3 from the front side 7 of the flexible supportive base 5. For example, the viscoelastomeric thermoset overlay 3 can be embedded into a shock absorbing porous flexible supportive base 5 *(e.g.,* a porous rubber, a foam, etc.) to form an inventive flexible roll-up container combination **1** that is useful for protecting fragile adhered items 13. Thus, the viscoelastomeric overlay 3 of the present invention can be effectively combined as a coating and/or as an embedded overlay 3 without departing from the scope of the invention.

Regardless of whether the viscoelastomeric thermoset overlay **3** is applied to the front side **7** of the flexible supportive base **5** as a prefabricated component, or is cured *in situ* onto the front side **7** of the base **5,** it is desirable that the overall attachment force between the overlay **3** and the front side **7** of the base **5** is greater than the adhesive force between the overlay **3** and any items **13** attached thereto (including the backside **9** material of the base **5,** when the flexible roll-up container combination **1** is rolled-up or otherwise folded upon itself in a generally front-to-back (*i.e.*, front side **7** to backside **9**) configuration).

Within certain cohesive and adhesive limits, the desired level of adhesion for any overlay **3** may depend to a certain extent upon the type of flexible roll-up container combination **1** and item(s) **13** to be stowed therein. The size, delicacy, configuration and weight of the stowed item(s) **1**3 will generally establish the releasable adhesive strengths that are best suited for any particular flexible roll-up container combination 1 end use, or for the intended item **13** to be stowed. For example, fragile items (*e.g*., Christmas tree decorations, glass articles, medications, etc.) will typically require a comparatively lower degree of adhesiveness of the overlay **3** than would be required by other more durable stowed items. Similarly, a heavy item **13** (*e.g.,* a hammer) **13** may require a comparatively higher degree of adhesiveness of the overlay 3 than would be required by other less substantial stowable items. However, excessive overlay **3** adhesiveness to a stowed item **13** may cause the flexible combination **1** to fail, such as wherein removal of the stowed item **13** causes the overlay **3** to separate from the flexible supportive base **5**. Thus, it is preferred that the overall attachment attraction between the viscoelastomeric thermoset overlay **3** and the flexible supportive base **5** should exceed the adhesive attraction of the overlay **3** to any given stowed item **13.**

Another unique advantage of the inventive flexible roll-up container combination **1** herein resides in the manner in which the viscoelastomeric thermoset overlay **3** feature will adhesively interact with items **13** which are adhesively attached thereto. The overlay's **3** adhesive interaction with stowed items **13,** when such items are placed thereupon, typically exhibits a slight initial increase in adhesiveness within about 5 to about 10 seconds after the initial adhesive attachment of an item **13** to the overlay **3,** which is then followed by a stabilization to about 90% of its maximum or ultimate adhesive attraction within about 60 seconds after the initial adhesive attachment of an item **13** to the overlay **3.** This slight change in adhesiveness may be indicative of an intermolecular realignment, coordinate covalent bonding, polarization of the plasticizing components, or some other molecular interaction therewithin. This subsequent adhesive increase may also be due to the viscoelastomeric properties of the overlay **3,** which due to adhesive cradling of an adhered item **13,** will provide added interfacing surface contacting area with the adhered item **13,** resulting in an increase and subsequent stabilization of the adhesive attraction therebetween.

Since the viscoelastomeric thermoset overlay **3** characteristically possesses an extremely high internal cohesiveness (*i.e.*, the overlay **3** does not tear or otherwise internally separate from itself when an item is detached from the overlay **3**), the overlay **3** is uniquely useful for diverse needs requiring a releasable, high tensile strength adhesive which fully retains its innate structural integrity upon adhesive release. As evidenced from the aforementioned, the most suitable adhesive strength for the overlay **3** for any given flexible roll-up container combination **1** ultimately depends upon its intended end usage.

As referenced above, the flexible roll-up container combination **1** equipped with a flexible supportive base **5** preferably has a comparatively lower adhesive attraction towards the backside **9** material/surface of the base **5** than it does towards the front side **7** surface of the base **5**. This feature allows the flexible roll-up container combination **1** to be rolled-up or otherwise folded upon itself, in a generally front-to-back configuration, such as for more secure containment of items **13**, ease of storage, and the like (*see e.g.,* Figures 1C, 3C, 4B, 5B, 6B and 7B). However, if the overlay **3** was to be insecurely secured to the front side **7** of the flexible supportive base **5,** there would exist a tendency for the overlay **3** to separate from the front side **7** of the supportive base **5**, especially upon unrolling or unfolding, or upon removal of an adhered item **13** therefrom. Since it is most desirable to cleanly separate an adhesively restrained item **13** from the overlay **3** without causing the overlay **3** to separate from the front side **7** of the flexible supportive base **5**, certain precautions can be undertaken to ensure that a more secure bonding of the overlay **3** to the front side **7** of the supportive base **5** occurs. Although mechanically securing (*e.g*., via sewing, framing, etc.) the overlay **3** to the flexible supportive base **5**, or the use of a protective cover **8** of a low adhesiveness to facilitate unrolling separation between the overlay **3** and the supportive base **5**, may be used, certain fabric-based flexible supportive bases **5** can provide excellent anchoring or embedding sites for more securely bonding the overlay **3** to the front side **7.** Accordingly, in some aspects, fabrics having a reduced adhesive attraction towards the overlay **3,** but which has a front side **7** comprising anchoring sites not present on the backside **9,** may nonetheless be used to provide a suitable flexible supportive base **5** for the flexible roll-up container combination **1** that may be more easily rolled and unrolled. It should be noted, however, that stowed items **13** within the rolled-up flexible roll-up container combination **1** will also serve as a separating barrier between the backside **9** of the supportive base **5** and the adhesive overlay **3,** thus assisting the rolling and unrolling thereof.

In some preferred embodiments, it is desirable to utilize the cohesive, adhesive and releasable overlay **3** in flexible roll-up container combinations **1** wherein the overlay **3** is utilized not only to immobilize stowed items **13** against movement, but also as an adhesive binder which adhesively binds the flexible roll-up container combination **1** in a rolled-up (*i.*e., closed configuration) form, while also permitting a cohesive release and unwinding or unfolding of the flexible roll-up container combination **1** (*i.e*., opened configuration). Achieving a more effective rolling and unrolling efficacy for the roll-up containers **1** may be accomplished in a number of different ways, as will be apparent to persons having ordinary skill in the art. One such method entails reducing the adhesive attraction between the backside **9** of the supportive base **5** and the overlay **3** (as compared to the front side **7**). This can be accomplished, for instance, by utilizing a supportive base **5** wherein the front side **7** comprises a material which has a higher overall attachment force to the overlay **3** than the material of the backside **9** (*e.g.,* a multi-layered supportive base **5**)**.** For example, the front side **7** of the base **5** can comprise a porous or otherwise anchoring surface material for embedding or anchoring the overlay **3** thereto, while the opposing backside **9** can comprise a material having a surface that is smooth and has a comparatively less or reduced adhesive attraction towards the overlay **3.** For demonstration purposes only, in one more particular example, the front side **7** of the flexible supportive base **5** can comprise a woven cotton or cotton polyester blend serving to anchor or embed the overlay **3,** while the opposing backside **9** of the flexible supportive base **5** can comprise a film having a smoother and/or flatter surface having a reduced adhesive affinity towards the overlay **3.** Exemplary thereof is a supportive base **5** comprised of a laminated composite of a polyvinylchloride film (serving as the backside **9** of the base **5)** laminated to a woven cotton and polyester blend (serving as the front side **7** of the base **5**)**,** thus providing a laminated composite composed of two different flexible materials exhibiting two different affinities towards the overlay **3,** all of which may be effectively utilized to provide a flexible roll-up container combination **1** that more easily rolls-up and unrolls. Figure 8 shows one such exemplary embodiment wherein the flexible supportive base **5** comprises a front side material **5A** and a backside material **5B,** wherein the front side material **5A** exhibits a greater attachment force to the viscoelastomeric thermoset overlay **3** as compared to the adhesive force between the backside material **5B** and the overlay **3.** Figure 8 also shows that a perimeter portion of the backside material **5B** is optionally folded over onto the peripheral edge portion of the front side material **5A,** and the composite is thereafter held together via an optional mechanical attachment (*i.e*., optional stitching **5C**). In such an exemplary embodiment, it can be desirable that each viscoelastomeric thermoset overlay **3** is disposed upon the base **5** such that the overlay **3** substantially only contacts the surface of the front side material **5A** when in a laid-flat configuration.

In one exemplary embodiment (described further in the Examples), natural and synthetic leathers can also provide a suitable supportive base **5** which may be altered so as to provide two different surfaces having different attraction affinities towards the overlay **3.** For example, the front side surface of an unfinished or roughened leather (*e.g*., suede) can provide a front side **7** of the flexible supportive base **5** having a sufficient porosity and/or anchoring elements to embed and retain the viscoelastomeric thermoset overlay **3** thereto. In contrast, the opposing backside **9** of the base **5** can provide a backside surface comprising a highly polished and smooth leather surface which will exhibit a lesser adhesive attraction towards the overlay **3** so as to permit an easier rolling and unrolling of the flexible roll-up container combination **1** without disengaging the overlay **3** from the front side **7,** while still providing a sufficient adhesive attraction upon the interfacing surfaces of the backside **9** to maintain the flexible roll-up container combination **1** in a rolled-up form. It should be understood that an adhesive attraction between the backside **9** of the supportive base **5** and the overlay **3** serves to assist in maintaining the rolled-up container combination **1** in a rolled-up state, thus eliminating the need for optional strings or other mechanical means to maintain the rolled-up container configuration, though the addition of such optional strings or other mechanical members does not depart from the scope of the invention (*see e.g.,* Figures 5A-6B). Accordingly, such a flexible roll-up container combination **1** equipped with a flexible supportive base **5** wherein the backside **9** has a reduced adhesive affinity towards the overlay **3** as compared to the front side **7** upon which the overlay **3** is disposed thus provides an easy roll-up and unrolling of the flexible roll-up container combination 1.

In another exemplary embodiment (described further in the Examples), another suitable flexible fabric base **5** includes a tightly-knitted cotton-based denim which permits thermosetting an overlay coating upon the front side **7** fabric surface **5A** with uncured or partially cured thermosetting viscoelastomeric reaction media without allowing excessive seepage (*e.g*., no more than nominal or trace amounts) of the reaction media to migrate to the backside **9** fabric surface **5B** of the flexible denim fabric base **5.** As evident from the aforementioned, there exist numerous flexible bases **5,** and techniques which can be applied, to coat or overlay the front side **7** of the flexible base **5** with the viscoelastomeric reaction product overlay **3**.

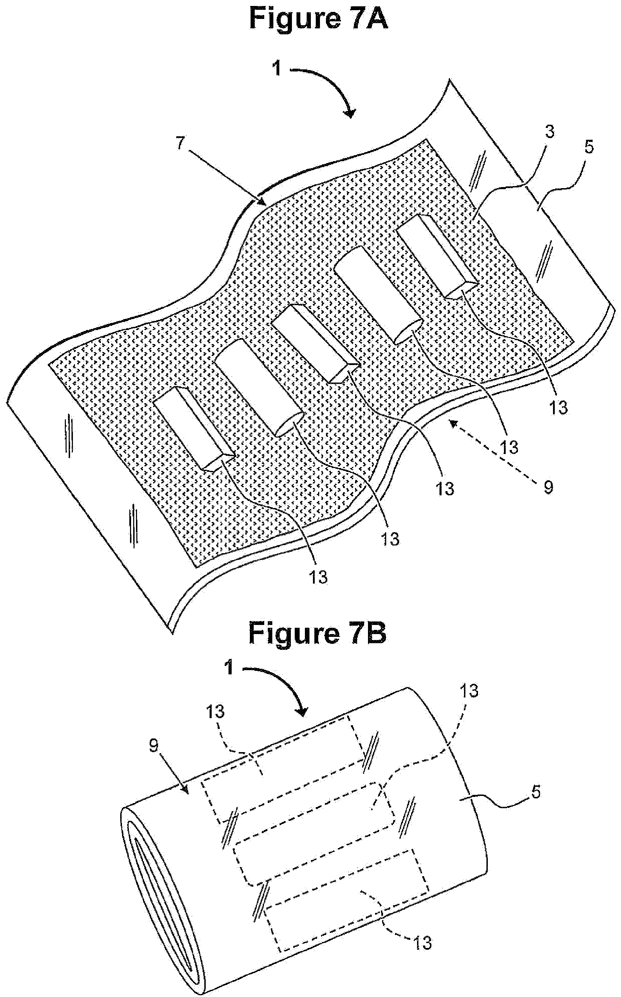

Referring now to Figures 7A-7B, in another exemplary embodiment, another suitable flexible base **5** includes a transparent material (*e.g*., transparent plastics, such as transparent polyethylene, transparent polypropylene, transparent polyurethane, etc.). Such transparent flexible bases **5** can be useful for forming a transparent flexible roll-up container combination **1**. Accordingly, a transparent viscoelastomeric thermoset overlay **3** would preferably be disposed onto the front side **7** of the transparent flexible base **5**. Ideally, in some such embodiments, an item **13** disposed within the transparent flexible roll-up container combination **1** could be visually discerned by a user (or another individual) having eyesight of 20/20 vision, even when the flexible roll-up container combination **1** is in a rolled-up, or otherwise folded, configuration. Such transparent flexible roll-up container combinations **1** can be useful for numerous venues (*e.g*., airports, athletic arenas, schools, etc.) where the items **13** must be identified, thus eliminating the inconvenience of opening-up the container and/or removing the items for inspection.

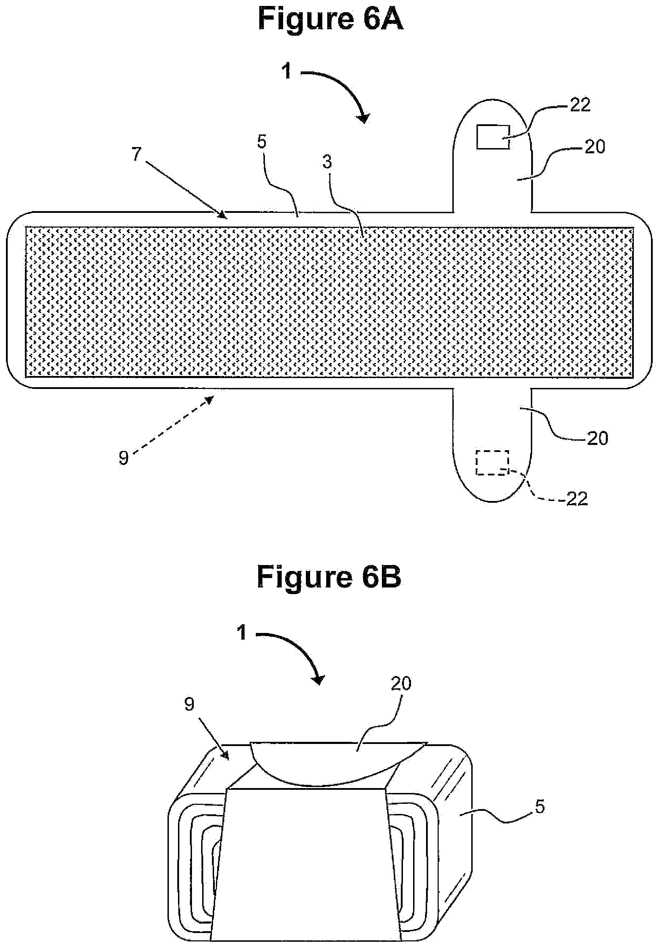

In some aspects, the flexible roll-up container combination **1** can comprise additional elements. For example, referring now to Figures 5A-5B, the flexible roll-up container combination **1** can comprise an optional strap **19** which can extend from the flexible supportive base **5,** and which can be looped over the flexible roll-up container combination **1** when in a rolled-up form and/or used for transporting (*e.g*., carrying) the combination **1.** Such optional strap **19** may be integral with the base **5,** or may be disposed as a separate attachment to the base **5.** In another example, referring now to Figures 6A-6B, the flexible roll-up container combination **1** can comprise optional enclosure panels **20** which extend from the flexible supportive base **5.** Such optional enclosure panels **20** may be integral with the base **5,** or may be disposed as separate attachments to the base **5.**The optional enclosure panels **20** can serve to fully enclose the container combination **1** in its rolled-up or otherwise folded form. In addition, such enclosure panels **20** can comprise an optional fastener element **22** (*e.g*., hook-and-loop, adhesives, snaps, the viscoelastic thermoset overlay polymer, etc.) which can assist the enclosure panels **20** to remain in a closed configuration. In examples not covered by the claimed invention, such optional strap **19** or optional enclosure panels **20** may be desirable when contained items **13** obstruct the adhesive interaction between the backside **9** uncoated flexible base surface and the front side **7** coated flexible base surface when in a rolled-up form, to facilitate the maintenance of the rolled-up flexible container in a rolled-up or otherwise folded configuration, and/or for aesthetic purposes, for example.

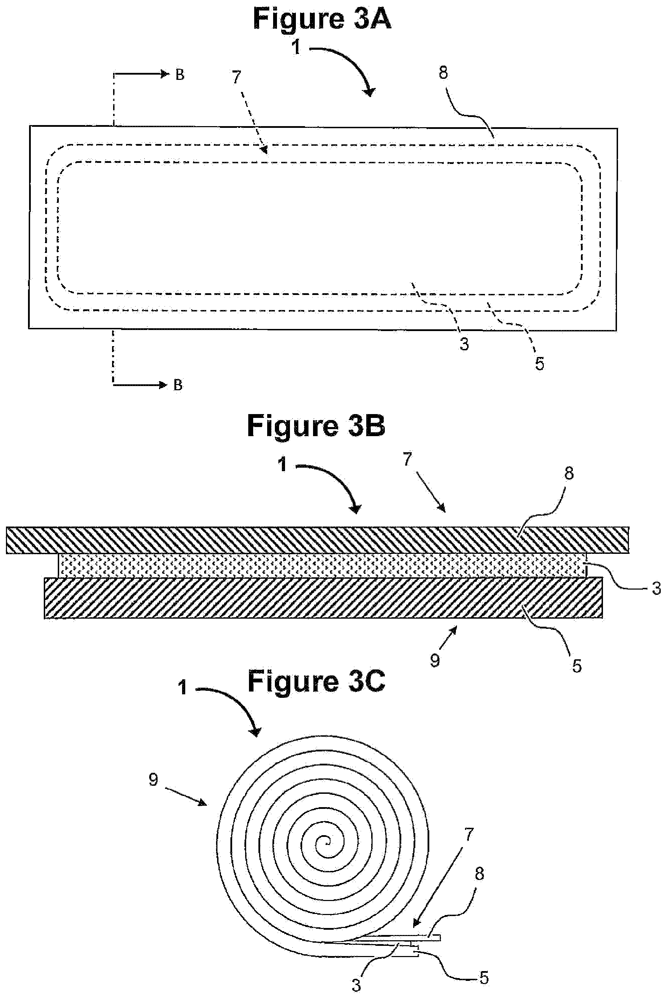

With reference now to Figures 3A-3C, in some aspects, it can be desirable to include an optional protective covering **8** which can be at least partially disposed upon an exposed surface of the viscoelastomeric thermoset overlay **3.** In general, a cured viscoelastomeric thermoset overlay **3** prepared from uncured or partially cured overlay reaction media reactants as described above may be readily adapted to adhere to a broad range of adhesively compatible flexible polymeric supportive bases **5,** such as polyurethanes, polyethylene terephthalates, polyolefins (*e.g*., polyethylene and polypropylene), polyacrylates, polyesters, etc. However, as also referenced above, some materials (*e.g*., flat and smooth PVC) may exhibit insufficient adhesive attraction properties (*i.e*., incompatible) to the viscoelastomeric thermoset overlay **3.** For example, materials which have a lower adhesive affinity to the overlay **3** as compared to the overall attachment force of the overlay **3** to the front side **7** of the flexible supportive base **5** and/or which do not comprise suitable anchoring sites (*i.e.*, such that the adhesive force between such materials is less than the attachment force between the overlay **3** and the front side **7** of the flexible supportive base **5**) can be used with the invention to provide a protective covering **8** for exposed surfaces of the viscoelastomeric thermoset overlay **3**. Such a protective covering **8** can be useful to prevent contamination of the overlay **3** from dust, lint, etc. and/or other accumulations which can adversely affect the adhesiveness of the overlay **3**. In some aspects, such protective coverings **8** can also be useful as packaging materials for the invention, such as when shipping the flexible roll-up container combination **1** in commerce. Such protective coverings **8** can desirably be readily peeled away from the overlay **3** without disengaging the overlay **3** from the flexible supportive base **5,** thus providing a clean, fully functional adhesive overlay **3.** Examples of suitable protective coverings include, but are not limited to, polyvinylchloride (PVC) films and sheets, paraffin wax-coated paper, Teflon^{®}, etc. In examples not covered by the claimed invention, a protective covering **8** can be utilized to separate the overlay **3** from the backside **9** of the flexible supportive base **5,** such as when the flexible roll-up container combination **1** is in a rolled-up configuration, particularly when the flexible roll-up container combination **1** contains no stowed items **13** (*e.g*., when shipping the flexible roll-up container combination **1** in commerce).

It is believed that the unique embodiments of the present invention may also extend to other adhesives possessing similar adhesive, cohesive and releasability properties as possessed by the thermosetting reaction products and overlays **3** described herein. Although the aforementioned viscoelastomeric reaction media primarily centers about those viscoelastomers prepared from a unique thermosetting reaction media by incorporating a controlled straight chain linkage diol to cross-linkage triol ratio, with an isocyanate reactant, in the presence of a sufficient amount and type of plasticizer, so as to provide the desired adhesive, cohesive and releasable overlay **3,** it is contemplated that this technology may also apply to other viscoelastomeric reaction products of a properly controlled cross-linked molecular structure separated by a proper amount of straight chain polyoxy linkages and polarity in the presence of sufficient polarized plasticizers, which yields a viscoelastomeric reaction product overlay (such as a viscoelastomeric thermoset overlay) of comparable stable cohesiveness, adhesiveness and releasability properties. The adhesive strength, the cohesiveness, the thermoset reaction media attributes, the compositional uniformity, the releasability, the antipathogenic attributes, the flexibility, the cleansability, and a host of other salient attributes, possessed by the viscoelastomeric thermoset overlay **3** uniquely and collectively distinguishes the flexible roll-up container combination **1** of this invention from conventional flexible containers.

The present invention may be better understood with reference to the following Examples.

### EXAMPLES

### Example 1

A viscoelastomeric thermoset reaction product adapted to provide a viscoelastomeric thermoset overlay **3** having exceptional onset fluidity, adhesiveness, cohesiveness and releasability efficacy was prepared by uniformly admixing together a two-part thermosetting reaction media mix comprised of:

| **Part A- Mix: Ingredients:** | **Percent by Weight:** |
|---|---|
| • Methylene diphenyl diisocyanate-based glycol prepolymer (ELASTOCAST TQZP23 available from BASF Corporation) | 6.42% |
| • Epoxidized soybean oil plasticizer | 26.90% |
| • Dibutyl sebacate plasticizer | 8.97% |

| **Part B- Mix: Ingredients:** | **Percent by Weight:** |
|---|---|
| • Polyether diol (ELASTOCAST C-4057 available from BASF Corporation) | 28.53% |
| • Polyether triol (ELASTOCAST C-4018 available from BASF Corporation) | 27.72% |
| • Catalyst (COSCAT 83 available from Vertellus Holdings LLC) | 0.16% |
| • UV inhibitor (TINUVIN B75 available from BASF Corporation) | 1.30% |
| **Total** | **100%** |

A 10 inch by 20-inch (25 cm x 51 cm) leather substrate was provided as a flexible supportive base **5,** wherein one side (*i.e*., the front side **7**) consisted of a suede leather textured surface, and the opposing side (*i.e*., the backside **9**) consisted of a polished leather textured surface. The leather substrate was selected because the polished leather side was characterized as having a lower adhesive attraction to a cured overlay **3** than its opposing suede leather surface.

The Part A-Mix ingredients and the Part B-Mix ingredients were each separately mixed. Then the Part A-Mix and Part B-Mix mixtures were combined and blended thoroughly to form a thermosetting reaction media. The resulting thermosetting reaction media of this Example 1 was then applied in liquid form to the suede leather front side **7** of the flexible supportive base **5** at a thickness of about 1 mm. It was observed that the thermosetting reaction media partially penetrated into the porous subsurface regions of the suede leather surface of the front side **7,** whereas the opposing smooth polished backside **9** remained visibly free from any reaction media penetration. The applied thermosetting reaction media was then allowed to cure *in situ* at ambient temperature (*i.e.,* about 21 °C) to form a viscoelastomeric thermoset overlay **3** that was tenaciously bonded to the suede leather front side **7** of the supportive base **5,** thus resulting in a flexible leather container combination **1** of the invention herein. It was observed that the resulting flexible roll-up container combination **1** could be relatively easily rolled and unrolled without detachment of the overlay **3** from the front side **7** surface of the supportive base **5**.

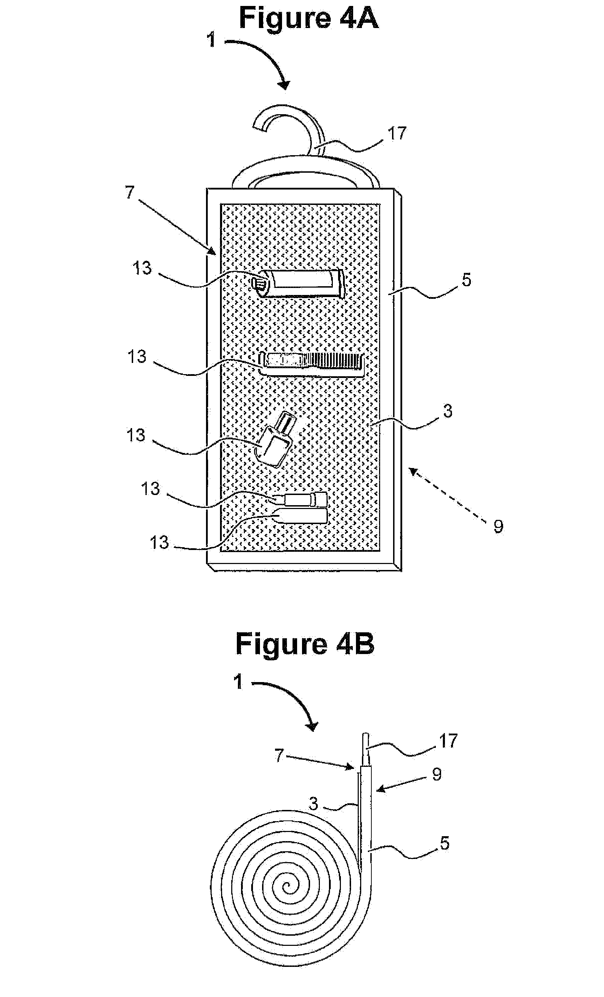

It was further observed that, since the adhesive attraction between the overlay **3** and the uncoated polished leather backside **9** of the flexible roll-up container combination **1** was lower than the overall attachment attraction between the overlay **3** and the suede leather front side **7**, the flexible roll-up container combination **1**, when rolled-up, not only provided an uncoated backside **9** leather surface which did not excessively stick to the abutting rolled-up interfacing overlay **3**, but also provided sufficient adhesiveness to maintain the rolled-up configuration of the flexible roll-up container combination **1,** and furthermore did not detach or otherwise separate the overlay **3** from the suede leather front side **7** when the flexible roll-up container combination **1** was unrolled. The resultant flexible roll-up container combination **1** provided an excellent roll-up container for a host of stowable objects, such as depicted by Figures 4A, 5A and 7A.

### Example 2

A viscoelastomeric thermoset reaction product for use as a viscoelastomeric thermoset overlay **3** containing a total of 45.84 wt% epoxidized soybean oil plasticizer was prepared by uniformly admixing together a two-part thermosetting reaction media mix comprised of

| **Part A- Mix: Ingredients:** | **Percent by Weight:** |
|---|---|
| • Methylene diphenyl diisocyanate-based glycol prepolymer (ELASTOCAST TQZP23 available from BASF Corporation) | 5.56% |
| • Epoxidized soybean oil plasticizer | 44.44% |

| **Part B- Mix: Ingredients:** | **Percent by Weight:** |
|---|---|
| • Polyether diol (ELASTOCAST C-4057 available from BASF Corporation) | 28.00% |
| • Polyether triol (ELASTOCAST C-4018 available from BASF Corporation) | 17.52% |
| • Epoxidized soybean oil plasticizer | 1.40% |
| • Catalyst (COSCAT 83 available from Vertellus Holdings LLC) | 0.52% |
| • UV inhibitor (TINUVIN B75 available from BASF Corporation) | 1.12% |
| • Colorant | 1.44% |
| **Total** | **100%** |

**Example 2a** - The Part A-Mix ingredients and the Part B-Mix ingredients were each separately mixed. Then the Part A-Mix and Part B-Mix mixtures were combined and blended thoroughly to form a thermosetting reaction media. A 3 mm thick layer of the resulting thermosetting reaction media of this Example 2 was then applied to the front side of a flexible supportive base substrate comprised of a 0.3 mm thick high-density polypropylene film, and the applied thermosetting reaction media layer was allowed cure *in situ* at ambient temperature (*i.e.*, about 21 °C) to provide a flexible roll-up container combination **1** comprising a viscoelastomeric thermoset overlay **3** bonded to a front side **7** of a flexible supportive base **5.**

**Example 2b** - A stand-alone viscoelastomeric thermoset overlay **3** was prefabricated by applying a 10 mil (0.3 mm) thick layer of the resulting thermosetting reaction media of this Example 2 to a flat and smooth PVC sheet and was allowed to cure at ambient temperature (*i.e*., about 21 °C). The peelable prefabricated viscoelastomeric thermoset overlay **3** was then used to convert a conventional (non-adhesive) flexible container into a flexible roll-up container combination **1** of this invention by removing the viscoelastomeric thermoset overlay **3** from the PVC sheet and adhesively applying it to the front side **7** of the conventional container.

**Observations** - It was observed that the epoxidized soybean oil plasticizer content, along with the diol to triol ratio of this Example 2, appears to have significantly contributed to the bonding strength of the cured reaction media to a host of flexible supportive bases **5,** especially when cured *in situ* as in Example 2a.

It was also observed that the overlay **3** derived from Example 2b may be transported in the channels of commerce as a stand-alone viscoelastomeric thermoset overlay **3,** which can later be peeled away from the PVC sheet and then installed by the ultimate consumer to form a flexible roll-up container combination **1** of the invention herein.

Prefabricated viscoelastomeric thermoset overlays **3** such as formed in Example 2b would desirably be protected on both surfaces by a protective covering **8** *(e.g.,* a PVC sheet). It was observed that such stand-alone prefabricated overlays **3** can be most suitably formulated with about 40 percent to about 50 percent by weight epoxidized triglyceride plasticizer. It is believed that at epoxidized plasticizer levels below about 40 percent by weight, the peelablility factor may become more difficult.

### Example 3

Example 3 utilized a similar Part A-Mix and Part B-Mix as in Example 1, except the epoxidized soybean oil plasticizer content was increased and the dibutyl sebacate plasticizer content was decreased.

| **Part A- Mix: Ingredients:** | **Percent by Weight:** |
|---|---|
| • Methylene diphenyl diisocyanate-based glycol prepolymer (ELASTOCAST TQZP23 available from BASF Corporation) | 6.42% |
| • Epoxidized soybean oil plasticizer | 30.78% |
| • Dibutyl sebacate plasticizer | 5.09% |

| **Part B- Mix: Ingredients:** | **Percent by Weight:** |
|---|---|
| • Polyether diol (ELASTOCAST C-4057 available from BASF Corporation) | 28.53% |
| • Polyether triol (ELASTOCAST C-4018 available from BASF Corporation) | 27.72% |
| • Catalyst (COSCAT 83 available from Vertellus Holdings LLC) | 0.16% |
| • UV inhibitor (TINUVIN B75 available from BASF Corporation) | 1.30% |
| **Total** | **100%** |

The Part A-Mix ingredients and the Part B-Mix ingredients were each separately mixed. Then the Part A-Mix and Part B-Mix mixtures were combined and blended thoroughly to form a thermosetting reaction media. A layer measuring about 1 mm thick of the resulting thermosetting reaction media of this Example 3 was then applied in liquid form to the front side **7** of a 0.5 mm thick tightly woven denim cloth measuring about 20 cm by about 46 cm to provide a flexible roll-up container combination **1** of the invention herein. Particular precautions were taken (*i.e*., increasing the epoxidized soybean oil plasticizer content and decreasing the viscosity-reducing dibutyl sebacate plasticizer content) to prevent the liquid reaction media from penetrating completely through to the opposing backside **9** of the denim cloth. The applied thermosetting reaction media was then allowed to cure *in situ* at ambient temperature *(i.e.,* about 21 °C) to provide a flexible roll-up container combination **1** possessing excellent roll-up and unrolling attributes, with the viscoelastomeric thermoset overlay **3** being securely and firmly bonded to the front side **7** of the denim cloth base **5** without any signs of detachment from the front side **7** when unrolling. The overlay **3** possessed exceptional adhesive, cohesive and releasability properties. Similar overlaying techniques utilizing a host of other woven fabrics may also be effectively utilized to prepare the flexible roll-up container combinations **1** herein. It was observed that in applying the uncured reaction media to the front side **7** of the denim cloth base **5,** the most appropriate application viscosity can be controlled by altering the weight ratio of epoxidized triglyceride plasticizer (epoxidized soybean oil) to ester plasticizer (dibutyl sebacate).

### Example 4

A viscoelastomeric thermoset overlay was prepared from a thermosetting reaction media comprised of:

| **Part A-Mix: Ingredients:** | **Percent by Weight:** |
|---|---|
| • Methylene diphenyl diisocyanate-based glycol prepolymer (ELASTOCAST TQZP23 available from BASF Corporation) | 6.51% |
| • Epoxidized soybean oil plasticizer | 26.73% |
| • Dibutyl sebacate plasticizer | 8.91% |

| **Part B-Mix: Ingredients:** | **Percent by Weight:** |
|---|---|
| • Polyether diol (ElastoCAST C-4057 by BASF Corporation) | 25.11% |
| • Polyether triol (ELASTOCAST C-4018 available from BASF Corporation) | 30.79% |
| • Catalyst (COSCAT 83 available from Vertellus Holdings LLC) | 0.16% |
| • UV inhibitor (TINUVIN B75 available from BASF Corporation) | 1.30% |
| • Colorant | 0.49% |
| **Total** | **100%** |

The Part A-Mix ingredients and the Part B-Mix ingredients were each separately mixed. Then the Part A-Mix and Part B-Mix mixtures were combined and blended thoroughly to form a thermosetting reaction media. A multilayered flexible base 5 measuring about 20 cm by about 46 cm was provided comprising a 0.5 mm thick denim fabric to which a backing layer comprised of 35 wt% polyvinyl chloride and 65 wt% polyether (WUJI gold foil leather, available from JoAnn Fabrics) was sewn. A layer measuring about 1 mm thick of the resulting thermosetting reaction media of this Example 4 was then applied to the front side 7 denim fabric layer of the base 5. The uncured thermosetting reaction media was applied as a uniform overlay penetrating and anchoring into the denim fabric. The 65% polyester / 35% PVC backing served to prevent the thermosetting reaction media from penetrating through to the backside **9** of the base 5. The applied thermosetting reaction media was then allowed to cure *in situ* at ambient temperature *(i.e.,* about 21 °C).

Upon curing, and thus forming an inventive flexible roll-up container combination **1** of the present invention, it was observed that the resulting viscoelastomeric thermoset overlay **3** exhibited excellent cohesive, adhesive and releasability properties. The container **1** was then rolled-up and subsequently unrolled, and it was observed that the overlay **3** did not show signs of any detachment from the front side **7** denim fabric of the flexible base **5.** Several items were then placed onto the viscoelastomeric thermoset overlay **3,** and it was observed that the stowed items **13** exhibited tenacious adherence to the overlay **3.** The container **1** was again rolled-up to form a securely closed container which did not open (i.e., unroll) on its own. Subsequently the container **1** was unrolled, and it was again observed that the overlay **3** did not show signs of any detachment from the front side **7** denim fabric of the flexible base **5,** and it was further observed that the items **13** remained in the same attached position in which they were placed. It was also observed that, when removed from the viscoelastomeric thermoset overlay **3,** the separated items **13** were visually free from any overlay **3** residue. Although the removal of the items **13** from the inventive combination **1** caused initial distortion of the overlay **3,** the overlay **3** readily returned to its innate form after separation of the items **13** therefrom. It was also observed that upon removal of the items **13** from the combination **1,** the overlay **3** did not separate from the denim fabric of the base 5.

It was further observed that since the thermosetting reaction media did not permeate through the 65% polyester / 35% PVC backside 9 surface, the flexible roll-up container combination 1 could be easily subsequently rolled into a rolled-up container configuration, and then again easily unrolled into a flat configuration, as many times as desired without any discernable loss of efficacy. It was also observed that the overlay 3 provided sufficient adhesion to maintain the flexible roll-up container combination 1 in a rolled-up configuration each time it was rolled. If desired, strings and/or end flaps could optionally be added to the flexible roll-up container combination 1 to additionally enclose the flexible container in a rolled-up configuration, but such strings or flaps were not necessary. The use of a flexible backside 9 barrier material to limit reaction media penetration onto the backside 9 of the flexible support base 5 can be applied to a host of flexible bases. Alternatively, the type of fabric or flexible support, in combination with a thermosetting reaction media of an appropriate viscosity and curing time, can be effectively utilized to control the depth of fabric or other flexible support penetration of the liquid reaction media.

It was also noted that the flexible roll-up container combination 1 exhibited antipathogenic properties. Such antipathogenic properties can help to maintain sanitary conditions.

In addition, a small amount of dust was applied to the viscoelastomeric thermoset overlay 3 to simulate a reduction in adhesion over time (e.g., due to dust accumulation). The flexible roll-up container combination **1** was then submerged in a soap solution containing tap water and a small amount of dish detergent (DAWN, available from Procter & Gamble), and a light scrubbing action using fingers was applied. Upon rinsing and air-drying, it was observed that the original adhesiveness, cohesiveness and releasability were fully restored to their original condition via the simple hand washing.

It will be appreciated that details of the foregoing examples, given for purposes of illustration, are not to be construed as limiting the scope of the present invention. Although only a few exemplary embodiments of the present invention have been described in detail above, persons having skill in the art will readily appreciate that many modifications are possible in the examples without materially departing from the novel teachings and advantages of this invention. For example, features described in relation to one example may be incorporated into any other example of the invention.

Accordingly, all such modifications are intended to be included within the scope of the present invention, which is defined in the following claims. Further, it is recognized that many embodiments may be conceived that do not achieve all of the advantages of some embodiments, particularly of the preferred embodiments, yet the absence of a particular advantage shall not be construed to necessarily mean that such an embodiment is outside the scope of the present invention. As various changes could be made in the above constructions without departing from the scope of the invention, it is intended that all matter contained in the above description shall be interpreted as illustrative and not in a limiting sense.

## Claims

1. A flexible roll-up container combination (1) comprising a flexible supportive base (5) having a front side (7) and a backside (9), and a cohesive, adhesive and releasable viscoelastomeric thermoset overlay (3) disposed upon the front side (7) of the flexible supportive base ,
wherein the container combination (1) can be rolled or folded in a front-to-back manner into a securely closed configuration, the container combination (1) being held in the securely closed configuration by adherence of the viscoelastomeric thermoset overlay (3) to the backside (9) of the flexible supportive base (5),
wherein the container combination (1) can be unrolled or unfolded into an open configuration for subsequent use without discernable detachment of the viscoelastomeric thermoset overlay (3) from the front side (7) of the flexible supportive base (5), and
wherein the flexible supportive base (5) is configured such that an overall attachment force of the viscoelastomeric thermoset overlay (3) to the front side (7) of the flexible supportive base is greater than an adhesive attachment force of the viscoelastomeric thermoset overlay (3) to the backside (9) of the flexible supportive base (5).

2. The flexible roll-up container of claim 1, in which the flexible supportive base (5) having a multilayer structure, the front side (7) of the multilayer structure comprising a material having higher overall attachment force to the viscoelastomeric thermoset overlay (3) than the backside (9).

3. The flexible roll-up container combination (1) of claim 1 or claim 2, wherein the flexible roll-up container combination (1) is in the form of a hanging container, and/or wherein at least one of the viscoelastomeric thermoset overlay (3) or the flexible supportive base (5) is transparent.

4. The flexible roll-up container combination (1) of any one of claims 1 to 3, wherein the viscoelastomeric thermoset overlay (3) has a thickness of 0.1 mm to 10 mm.

5. The flexible roll-up container combination (1) of any one of claims 1 to 4, wherein the front side (7) of the flexible supportive base (5) is at least partially impregnated with the viscoelastomeric thermoset overlay (3), and wherein the backside (9) of the flexible supportive base (5) is substantially free of the viscoelastomeric thermoset overlay (3).

6. The flexible roll-up container combination (1) of claim 1, wherein the viscoelastomeric thermoset overlay (3) comprises:
a) 1 wt% to 10 wt% isocyanate prepolymer;
b) 35 wt% to 70 wt% polyols comprising straight chain linking polyols and crosslinking polyols;
c) 10 wt% to 50 wt% epoxidized triglyceride plasticizer; and
d) 0 wt% to 40 wt% ester plasticizer;
wherein the viscoelastomeric thermoset overlay (3) further comprises a straight chain linking polyol to crosslinking polyol weight ratio of 4:1 to 1:4; and/or wherein the viscoelastomeric thermoset overlay (3) further comprises an epoxidized triglyceride plasticizer to ester plasticizer weight ratio of 1:0 to 1:1.

7. The flexible roll-up container combination (1) of claim 6, wherein the ester plasticizer is selected from the group consisting of sebacates, dipates, glutarates, dibenzoates, phthalates, terephthalates, azelates, and combinations thereof.

8. The flexible roll-up container combination (1) of claim 6 or claim 7,
wherein the ester plasticizer has a molecular weight of less than 750, and/or wherein the flexible roll-up container combination (1) is transparent, and/or wherein the straight chain linking polyols and crosslinking polyols each have repetitive ether groupings, and/or
wherein the isocyanate prepolymer is a diisocyanate prepolymer.

9. The flexible roll-up container combination (1) of any one of claims 1 to 8,
wherein the viscoelastomeric thermoset overlay (3) is characterized as having a sufficient adhesiveness to retain an item (13) disposed thereon against displacement via gravity and to release the item (13) upon exertion of a removal force without discernable detachment of the viscoelastomeric thermoset overlay (3) from the front side (7) of the flexible supportive base (5), and/or
wherein the viscoelastomeric thermoset overlay (3) has been bonded to the front side (7) of the flexible supportive base (5) via in situ curing, and/or
wherein the flexible roll-up container combination (1) is characterized as being reusable, and/or
wherein the flexible roll-up container combination (1) is characterized as being cleansable via hand washing with a solution of water and dish detergent such that the cohesive, adhesive and releasability properties of the viscoelastomeric thermoset overlay (3) substantially return to their original state.

10. The flexible roll-up container combination (1) of any one of claims 1 to 9,
wherein the flexible roll-up container combination (1) is characterized as being antipathogenic, and/or
wherein an item (13) detached from the flexible roll-up container combination is substantially free from residual polymer.

11. A method for preparing a flexible roll-up container combination (1) comprising:
a) providing a flexible supportive base (5) having a front side (7) and a backside (9), wherein the flexible supportive base (5) is of a sufficient size and structural integrity to support a desired stowable item (13);
b) disposing a thermoset viscoelastomeric reaction product upon the front side (7) of the flexible supportive base (5) to form a viscoelastomeric thermoset overlay (3) disposed thereupon;
c) rolling or folding the flexible roll-up container combination (1) upon itself in a front-to-back manner to form a closed configuration;
wherein the container combination (1) is held in the closed configuration by adherence of the viscoelastomeric overlay (3) to the backside (9) of the flexible supportive base (5); and
d) unrolling or unfolding the flexible roll-up container combination (1) to form an open container, wherein the flexible roll-up container combination (1) exhibits no discernable detachment of the viscoelastomeric thermoset overlay (3) from the front side (7) of the flexible supportive base (5);
wherein the viscoelastomeric thermoset overlay (3) is bonded to the flexible supportive base (5) by a thermoset bonding of the thermoset viscoelastomeric reaction product to the front side (7) of the flexible supportive base (5) or by an adhesive bonding of the viscoelastomeric thermoset overlay (3) to the front side (7) of the flexible supportive base (5);
wherein the viscoelastomeric thermoset overlay (3) possesses adhesive, cohesive and releasability properties sufficient to retain a desired stowable item (13) at a stabilized stowable position to form a stowed item (13), and to release the stowed item (13) by application of a removal force sufficient to overcome an adhesive attraction between the stowed item (13) and the viscoelastomeric thermoset overlay (3) to form a removed item (13); and
wherein the flexible supportive base (5) is configured such that an overall attachment force of the viscoelastomeric thermoset overlay (3) to the front side (7) of the flexible supportive base is greater than an adhesive attachment force of the viscoelastomeric thermoset overlay (3) to the backside (9) of the flexible supportive base (5).

12. The method of claim 11, wherein the adhesive, cohesive and releasability properties remain substantially intact.

13. The method of claim 11 or claim 12,
wherein the removed item (13) exhibits no more than a nominal amount of a polymeric residue from the viscoelastomeric thermoset overlay (3), and/or wherein the disposing comprises disposing a reaction media which forms the thermoset viscoelastomeric reaction product onto the front side (7) of the flexible supportive base (5) and then curing the reaction media in situ, and/or wherein the disposing comprises adhesively disposing a cured layer of the thermoset viscoelastomeric reaction product upon the front side (7) of the flexible supportive base (5), and/or
wherein the viscoelastomeric thermoset overlay (3) and the flexible supportive base are transparent.

14. The method of claim 11, wherein the thermoset viscoelastomeric reaction product is derived from a reaction media comprising:
a) 1 wt% to 10 wt% diisocyanate prepolymer;
b) 35 wt% to 70 wt% polyols comprising straight chain linking diols and crosslinking triols; and
c) 10 wt% to 55 wt% plasticizer comprising 10-percent to 50-percent by weight of the reaction media of epoxidized triglyceride plasticizer and 0-percent to 40-percent by weight of the reaction media of ester plasticizer;
wherein the diols and triols each have repetitive ether groupings; wherein the reaction media further comprises a diol to triol weight ratio of 4:1 to 1:4; and
wherein the reaction media further comprises an epoxidized triglyceride plasticizer to ester plasticizer weight ratio of 1:0 to 1:1.

15. The method of claim 14,
wherein the epoxidized triglyceride plasticizer comprises epoxidized soybean oil, and/or
wherein the amount of plasticizer within the reaction media is sufficient to provide a viscoelastomeric thermoset overlay (3) possessing sufficient adhesiveness to stabilize the stowed item (13) from unintentional displacement, and sufficient cohesiveness to prevent degradation of the viscoelastomeric thermoset overlay (3) upon application of a removal force to the stowed item (13).

## Patentansprüche

1. Flexible Aufrollbehälterkombination (1), umfassend eine flexible Stützbasis (5), die eine Vorderseite (7) und eine Rückseite (9) aufweist, und eine kohäsive, adhäsive und lösbare viskoelastomere duroplastische Deckschicht (3), die auf der Vorderseite (7) der flexiblen Stützbasis angeordnet ist,
wobei die Behälterkombination (1) von vorne nach hinten in eine sicher geschlossene Konfiguration gerollt oder gefaltet werden kann, wobei die Behälterkombination (1) durch Haftung der viskoelastomeren duroplastischen Deckschicht (3) an der Rückseite (9) der flexiblen Stützbasis (5) in der sicher geschlossenen Konfiguration gehalten wird, wobei die Behälterkombination (1) zur nachfolgenden Verwendung in eine offene Konfiguration abgerollt oder aufgefaltet werden kann, ohne dass eine Ablösung der viskoelastomeren duroplastischen Deckschicht (3) von der Vorderseite (7) der flexiblen Stützbasis (5) erkennbar ist, und
wobei die flexible Stützbasis (5) derart konfiguriert ist, dass eine Gesamtanbringungskraft der viskoelastomeren duroplastischen Deckschicht (3) an der Vorderseite (7) der flexiblen Stützbasis größer als eine Haftanbringungskraft der viskoelastomeren duroplastischen Deckschicht (3) an der Rückseite (9) der flexiblen Stützbasis (5) ist.

2. Flexibler Aufrollbehälter nach Anspruch 1, wobei die flexible Stützbasis (5) eine mehrschichtige Struktur aufweist, wobei die Vorderseite (7) der mehrschichtigen Struktur ein Material umfasst, das eine höhere Gesamtanbringungskraft an der viskoelastomeren duroplastische Deckschicht (3) als der Rückseite (9) aufweist.

3. Flexible Aufrollbehälterkombination (1) nach Anspruch 1 oder Anspruch 2, wobei die flexible Aufrollbehälterkombination (1) in der Form eines Aufhängebehälters vorliegt und/oder wobei mindestens eines der viskoelastomeren duroplastischen Deckschicht (3) oder der flexiblen Stützbasis (5) transparent ist.

4. Flexible Aufrollbehälterkombination (1) nach einem der Ansprüche 1 bis 3, wobei die viskoelastomere duroplastische Deckschicht (3) eine Dicke von 0,1 mm bis 10 mm aufweist.

5. Flexible Aufrollbehälterkombination (1) nach einem der Ansprüche 1 bis 4, wobei die Vorderseite (7) der flexiblen Stützbasis (5) zumindest teilweise mit der viskoelastomeren duroplastischen Deckschicht (3) imprägniert ist und wobei die Rückseite (9) der flexiblen Stützbasis (5) im Wesentlichen frei von der viskoelastomeren duroplastischen Deckschicht (3) ist.

6. Flexible Aufrollbehälterkombination (1) nach Anspruch 1, wobei die viskoelastomere duroplastische Deckschicht (3) umfasst:
a) zu 1 Gew.-% bis 10 Gew.-% Isocyanatprepolymer;
b) zu 35 Gew.-% bis 70 Gew.-% Polyole, umfassend geradkettige Verknüpfungspolyole und Vernetzungspolyole;
c) zu 10 Gew.-% bis 50 Gew.-% epoxidierter Triglyceridweichmacher; und
d) zu 0 Gew.-% bis 40 Gew.-% Esterweichmacher;
wobei die viskoelastomere duroplastische Deckschicht (3) ferner ein Verhältnis von geradkettigem Verknüpfungspolyol zu vernetzendem Polyol von 4:1 bis 1:4 umfasst; und/oder
wobei die viskoelastomere duroplastische Deckschicht (3) ferner ein Verhältnis von epoxidiertem Triglyceridweichmacher zu Esterweichmacher von 1:0 bis 1:1 umfasst.

7. Flexible Aufrollbehälterkombination (1) nach Anspruch 6, wobei der Esterweichmacher aus der Gruppe ausgewählt ist, die aus Sebacaten, Dipaten, Glutaraten, Dibenzoaten, Phthalaten, Terephthalaten, Azelaten und Kombinationen davon besteht.

8. Flexible Aufrollbehälterkombination (1) nach Anspruch 6 oder Anspruch 7, wobei der Esterweichmacher ein Molekulargewicht von weniger als 750 aufweist und/oder wobei die flexible Aufrollbehälterkombination (1) transparent ist und/oder wobei die geradkettigen Verknüpfungspolyole und Vernetzungspolyole jeweils sich wiederholende Ethergruppierungen aufweisen, und/oder wobei das Isocyanatprepolymer ein Diisocyanatpräpolymer ist.

9. Flexible Aufrollbehälterkombination (1) nach einem der Ansprüche 1 bis 8, wobei die viskoelastomere duroplastische Deckschicht (3) **dadurch gekennzeichnet ist, dass** sie ein ausreichendes Haftvermögen aufweist, um einen darauf angeordneten Gegenstand (13) gegen Verschiebung über die Schwerkraft zu halten und den Gegenstand (13) bei Ausübung einer Entfernungskraft freizusetzen, ohne dass ein Ablösen der viskoelastomeren duroplastischen Deckschicht (3) von der Vorderseite (7) der flexiblen Stützbasis (5) erkennbar ist, und/oder
wobei die viskoelastomere duroplastische Deckschicht (3) über In-situ-Härtung an die Vorderseite (7) der flexiblen Stützbasis (5) gebunden wurde, und/oder
wobei die flexible Aufrollbehälterkombination (1) als wiederverwendbar gekennzeichnet ist, und/oder wobei die flexible Aufrollbehälterkombination (1) **dadurch gekennzeichnet ist, dass** sie über Handwaschen mit einer Lösung aus Wasser und Geschirrspülmittel derart reinigbar ist, dass die kohäsiven, adhäsiven und lösbaren Eigenschaften der viskoelastomeren duroplastischen Deckschicht (3) im Wesentlichen in ihren ursprünglichen Zustand zurückkehren.

10. Flexible Aufrollbehälterkombination (1) nach einem der Ansprüche 1 bis 9, wobei die flexible Aufrollbehälterkombination (1) als antipathogen gekennzeichnet ist und/oder
wobei ein Gegenstand (13), der von der flexiblen Aufrollbehälterkombination gelöst ist, im Wesentlichen frei von Restpolymer ist.

11. Verfahren zum Herstellen einer flexiblen Aufrollbehälterkombination (1), umfassend:
a) Bereitstellen einer flexiblen Stützbasis (5), die eine Vorderseite (7) und eine Rückseite (9) aufweist, wobei die flexible Stützbasis (5) eine ausreichende Größe und strukturelle Integrität aufweist, um einen gewünschten verstaubaren Gegenstand (13) zu stützen;
b) Anordnen eines duroplastischen viskoelastomeren Reaktionsprodukts auf der Vorderseite (7) der flexiblen Stützbasis (5), um eine darauf angeordnete viskoelastomere duroplastische Deckschicht (3) zu bilden;
c) Rollen oder Falten der flexiblen Aufrollbehälterkombination (1) auf sich selbst von vorne nach hinten, um eine geschlossene Konfiguration zu bilden; wobei die Behälterkombination (1) durch Haftung der viskoelastomeren Deckschicht (3) an der Rückseite (9) der flexiblen Stützbasis (5) in der geschlossenen Konfiguration gehalten wird; und
d) Abrollen oder Auffalten der flexiblen Aufrollbehälterkombination (1), um einen offenen Behälter zu bilden, wobei die flexible Aufrollbehälterkombination (1) kein erkennbares Ablösen der viskoelastomeren duroplastischen Deckschicht (3) von der Vorderseite (7) der flexiblen Stützbasis (5) zeigt;
wobei die viskoelastomere duroplastische Deckschicht (3) durch eine duroplastische Bindung des duroplastischen viskoelastomeren Reaktionsprodukts an die Vorderseite (7) der flexiblen Stützbasis (5) oder durch eine Haftverbindung der viskoelastomeren duroplastischen Deckschicht (3) an die Vorderseite (7) der flexiblen Stützbasis (5) an die flexible Stützbasis (5) gebunden ist;
wobei die viskoelastomere duroplastische Deckschicht (3) adhäsive, kohäsive und lösbare Eigenschaften besitzt, die ausreichend sind, um einen gewünschten verstaubaren Gegenstand (13) in einer stabilisierten verstaubaren Position zu halten, um einen verstauten Gegenstand (13) zu bilden, und um den verstauten Gegenstand (13) durch Aufbringen einer Entfernungskraft zu lösen, die ausreichend ist, um eine Haftanziehung zwischen dem verstauten Gegenstand (13) und der viskoelastomeren duroplastischen Deckschicht (3) zu überwinden, um einen entfernten Gegenstand (13) zu bilden; und
wobei die flexible Stützbasis (5) derart konfiguriert ist, dass eine Gesamtanbringungskraft der viskoelastomeren duroplastischen Deckschicht (3) an der Vorderseite (7) der flexiblen Stützbasis größer als eine Haftanbringungskraft der viskoelastomeren duroplastischen Deckschicht (3) an der Rückseite (9) der flexiblen Stützbasis (5) ist.

12. Verfahren nach Anspruch 11, wobei die adhäsiven, kohäsiven und lösbaren Eigenschaften im Wesentlichen intakt bleiben.

13. Verfahren nach Anspruch 11 oder Anspruch 12, wobei der entfernte Gegenstand (13) nicht mehr als eine Nennmenge eines polymeren Rückstands aus der viskoelastomeren duroplastischen Deckschicht (3) aufweist und/oder wobei das Anordnen das Anordnen eines Reaktionsmediums, das das viskoelastomere duroplastische Reaktionsprodukt bildet, auf der Vorderseite (7) der flexiblen Stützbasis (5) und dann das Aushärten des Reaktionsmediums in situ umfasst und/oder wobei das Anordnen das adhäsive Anordnen einer gehärteten Schicht des viskoelastomeren duroplastischen Reaktionsprodukts auf der Vorderseite (7) der flexiblen Stützbasis (5) umfasst, und/oder
wobei die viskoelastomere duroplastische Deckschicht (3) und die flexible Stützbasis transparent sind.

14. Verfahren nach Anspruch 11, wobei das duroplastische viskoelastomere Reaktionsprodukt von einem Reaktionsmedium abgeleitet wird, das umfasst:
a) zu 1 Gew.-% bis 10 Gew.-% Diisocyanatprepolymer;
b) zu 35 Gew.-% bis 70 Gew.-% Polyole, umfassend geradkettige Verknüpfungsdiole und Vernetzungstriole;
c) zu 10 Gew.-% bis 55 Gew.-% Weichmacher, wobei das Reaktionsmedium zu 10 Gew.-% bis 50 Gew.-% den epoxidierten Triglyceridweichmacher und das Reaktionsmedium zu 0 Gew.-% bis 40 Gew.-% den Esterweichermacher umfasst;
wobei die Diole und Triole jeweils sich wiederholende Ethergruppierungen aufweisen;
wobei das Reaktionsmedium ferner ein Gewichtsverhältnis von Diol zu Triol von 4:1 bis 1:4 umfasst; und
wobei das Reaktionsmedium ferner ein Gewichtsverhältnis von epoxidiertem Triglyceridweichmacher zu Esterweichmacher von 1:0 bis 1:1 umfasst.

15. Verfahren nach Anspruch 14, wobei der epoxidierte Triglyceridweichmacher epoxidiertes Sojabohnenöl umfasst, und/oder
wobei die Menge an Weichmacher innerhalb des Reaktionsmediums ausreichend ist, um eine viskoelastomere duroplastische Deckschicht (3) bereitzustellen, die ein ausreichendes Haftvermögen aufweist, um den verstauten Gegenstand (13) in Bezug auf unbeabsichtigtes Verschieben zu stabilisieren, und ausreichend Kohäsion, um einen Abbau der viskoelastomeren duroplastischen Deckschicht (3) bei Ausübung einer Entfernungskraft auf den verstauten Gegenstand (13) zu verhindern.

## Revendications

1. Combinaison de récipient enroulable flexible (1) comprenant une base de support flexible (5) ayant un côté avant (7) et un côté arrière (9), et un revêtement thermodurci viscoélastomère cohésif, adhésif et libérable (3) disposé sur le côté avant (7) de la base de support flexible,
dans laquelle la combinaison de récipient (1) peut être enroulée ou pliée d'une manière de l'avant vers l'arrière en une configuration fermée de manière sûre, la combinaison de récipient (1) étant maintenue dans la configuration fermée de manière sûre par l'adhérence du revêtement thermodurci viscoélastomère (3) au côté arrière (9) de la base de support flexible (5),
dans laquelle la combinaison de récipient (1) peut être déroulée ou dépliée en une configuration ouverte pour une utilisation ultérieure sans détachement discernable du revêtement thermodurci viscoélastomère (3) hors du côté avant (7) de la base de support flexible (5), et
dans laquelle la base de support flexible (5) est configurée de sorte qu'une force de fixation globale du revêtement thermodurci viscoélastomère (3) au côté avant (7) de la base de support flexible est supérieure à une force de fixation adhésive du revêtement thermodurci viscoélastomère (3) au côté arrière (9) de la base de support flexible (5).

2. Récipient enroulable flexible selon la revendication 1, dans lequel la base de support flexible (5) a une structure multicouche, le côté avant (7) de la structure multicouche comprenant un matériau ayant une force de fixation globale au revêtement thermodurci viscoélastomère (3) plus élevée que le côté arrière (9).

3. Combinaison de récipient enroulable flexible (1) selon la revendication 1 ou la revendication 2, dans laquelle la combinaison de récipient enroulable flexible (1) est sous la forme d'un récipient suspendu, et/ou dans laquelle au moins un élément parmi le revêtement thermodurci viscoélastomère (3) ou la base de support flexible (5) est transparent.

4. Combinaison de récipient enroulable flexible (1) selon l'une quelconque des revendications 1 à 3, dans laquelle le revêtement thermodurci viscoélastomère (3) a une épaisseur de 0,1 mm à 10 mm.

5. Combinaison de récipient enroulable flexible (1) selon l'une quelconque des revendications 1 à 4, dans laquelle le côté avant (7) de la base de support flexible (5) est au moins partiellement imprégné du revêtement thermodurci viscoélastomère (3), et dans laquelle le côté arrière (9) de la base de support flexible (5) est sensiblement exempt du revêtement thermodurci viscoélastomère (3).

6. Combinaison de récipient enroulable flexible (1) selon la revendication 1, dans laquelle le revêtement thermodurci viscoélastomère (3) comprend :
a) 1 % en poids à 10 % en poids de prépolymère d'isocyanate ;
b) 35 % en poids à 70 % en poids de polyols comprenant des polyols de liaison à chaîne droite et des polyols de réticulation ;
c) 10 % en poids à 50 % en poids de plastifiant de triglycéride époxydé ; et
d) 0 % en poids à 40 % en poids de plastifiant d'ester ; dans laquelle le revêtement thermodurci viscoélastomère (3) comprend en outre un rapport pondéral de polyol de liaison à chaîne droite au polyol de réticulation de 4:1 à 1:4 ; et/ou
dans laquelle le revêtement thermodurci viscoélastomère (3) comprend en outre un rapport pondéral de plastifiant de triglycéride époxydé au plastifiant d'ester de 1:0 à 1:1.

7. Combinaison de récipient enroulable flexible (1) selon la revendication 6, dans laquelle le plastifiant d'ester est sélectionné dans le groupe constitué de sébacates, d'adipates, de glutarates, de dibenzoates, de phtalates, de téréphtalates, d'azélates, et de combinaisons de ceux-ci.

8. Combinaison de récipient enroulable flexible (1) selon la revendication 6 ou la revendication 7, dans laquelle le plastifiant d'ester a un poids moléculaire inférieur à 750, et/ou dans laquelle la combinaison de récipient enroulable flexible (1) est transparente, et/ou dans laquelle les polyols de liaison à chaîne droite et les polyols de réticulation ont chacun des groupements éther répétitifs, et/ou
dans laquelle le prépolymère d'isocyanate est un prépolymère de diisocyanate.

9. Combinaison de récipient enroulable flexible (1) selon l'une quelconque des revendications 1 à 8, dans laquelle le revêtement thermodurci viscoélastomère (3) est caractérisé comme ayant une adhésivité suffisante pour la retenue d'un article (13) disposé sur celui-ci contre un déplacement par l'intermédiaire de la gravité et pour la libération de l'article (13) lors de l'exercice d'une force de retrait sans détachement discernable du revêtement thermodurci viscoélastomère (3) hors du côté avant (7) de la base de support flexible (5), et/ou
dans laquelle le revêtement thermodurci viscoélastomère (3) a été lié au côté avant (7) de la base de support flexible (5) par l'intermédiaire d'un durcissement in situ, et/ou dans laquelle la combinaison de récipient enroulable flexible (1) est caractérisée comme étant réutilisable, et/ou
dans laquelle la combinaison de récipient enroulable flexible (1) est caractérisée comme pouvant être nettoyée par l'intermédiaire d'un lavage à la main avec une solution d'eau et de détergent à vaisselle de sorte que les propriétés cohésives, adhésives et de libérabilité du revêtement thermodurci viscoélastomère (3) reviennent sensiblement à leur état d'origine.

10. Combinaison de récipient enroulable flexible (1) selon l'une quelconque des revendications 1 à 9, dans laquelle la combinaison de récipient enroulable flexible (1) est caractérisée comme étant antipathogène, et/ou dans laquelle un article (13) détaché de la combinaison de récipient enroulable flexible est sensiblement exempt de polymère résiduel.

11. Procédé pour la préparation d'une combinaison de récipient enroulable flexible (1) comprenant :
a) la fourniture d'une base de support flexible (5) ayant un côté avant (7) et un côté arrière (9), dans lequel la base de support flexible (5) est d'une taille et d'une intégrité structurelle suffisantes pour le support d'un article escamotable souhaité (13) ;
b) la disposition d'un produit de réaction viscoélastomère thermodurci sur le côté avant (7) de la base de support flexible (5) pour la formation d'un revêtement thermodurci viscoélastomère (3) disposé sur celui-ci ;
c) l'enroulement ou le pliage de la combinaison de récipient enroulable flexible (1) sur elle-même d'une manière de l'avant vers l'arrière pour la formation d'une configuration fermée ;
dans lequel la combinaison de récipient (1) est maintenue dans la configuration fermée par l'adhérence du revêtement viscoélastomère (3) au côté arrière (9) de la base de support flexible (5) ; et
d) le déroulement ou le dépliage de la combinaison de récipient enroulable flexible (1) pour la formation d'un récipient ouvert, dans lequel la combinaison de récipient enroulable flexible (1) ne présente aucun détachement discernable du revêtement thermodurci viscoélastomère (3) hors du côté avant (7) de la base de support flexible (5) ; dans lequel le revêtement thermodurci viscoélastomère (3) est lié à la base de support flexible (5) par une liaison thermodurcie du produit de réaction viscoélastomère thermodurci au côté avant (7) de la base de support flexible (5) ou par une liaison adhésive du revêtement thermodurci viscoélastomère (3) au côté avant (7) de la base de support flexible (5) ;
dans lequel le revêtement thermodurci viscoélastomère (3) possède des propriétés adhésives, cohésives et de libérabilité suffisantes pour la retenue d'un article escamotable souhaité (13) à une position escamotable stabilisée pour la formation d'un article escamoté (13), et pour la libération de l'article escamoté (13) par l'application d'une force de retrait suffisante pour surmonter une attraction adhésive entre l'article escamoté (13) et le revêtement thermodurci viscoélastomère (3) pour la formation d'un article retiré (13) ; et
dans laquelle la base de support flexible (5) est configurée de telle sorte qu'une force de fixation globale du revêtement thermodurci viscoélastomère (3) au côté avant (7) de la base de support flexible est supérieure à une force de fixation adhésive du revêtement thermodurci viscoélastomère (3) au côté arrière (9) de la base de support flexible (5).

12. Procédé selon la revendication 11, dans lequel les propriétés adhésives, cohésives et de libérabilité restent sensiblement intactes.

13. Procédé selon la revendication 11 ou la revendication 12, dans lequel l'article retiré (13) ne présente pas plus d'une quantité nominale d'un résidu polymérique provenant du revêtement thermodurci viscoélastomère (3), et/ou dans lequel la disposition comprend la disposition d'un milieu de réaction qui forme le produit de réaction viscoélastomère thermodurci sur le côté avant (7) de la base de support flexible (5) puis le durcissement du milieu de réaction in situ, et/ou dans lequel la disposition comprend la disposition de manière adhésive d'une couche durcie du produit de réaction viscoélastomère thermodurci sur le côté avant (7) de la base de support flexible (5), et/ou dans lequel le revêtement thermodurci viscoélastomère (3) et la base de support flexible sont transparents.

14. Procédé selon la revendication 11, dans lequel le produit de réaction viscoélastomère thermodurci est dérivé d'un milieu de réaction comprenant :
a) 1 % en poids à 10 % en poids de prépolymère de diisocyanate ;
b) 35 % en poids à 70 % en poids de polyols comprenant des diols de liaison à chaîne droite et des triols de réticulation ; et
c) 10 % en poids à 55 % en poids de plastifiant comprenant 10 pour cent à 50 pour cent en poids du milieu de réaction de plastifiant de triglycéride époxydé et 0 pour cent à 40 pour cent en poids du milieu de réaction de plastifiant d'ester ;
dans lequel les diols et les triols ont chacun des groupements éther répétitifs ;
dans lequel le milieu de réaction comprend en outre un rapport pondéral de diol au triol de 4:1 à 1:4 ; et
dans lequel le milieu de réaction comprend en outre un rapport pondéral de plastifiant de triglycéride époxydé au plastifiant d'ester de 1:0 à 1:1.

15. Procédé selon la revendication 14, dans lequel le plastifiant de triglycéride époxydé comprend de l'huile de soja époxydée, et/ou
dans lequel la quantité de plastifiant à l'intérieur du milieu de réaction est suffisante pour la fourniture d'un revêtement thermodurci viscoélastomère (3) possédant une adhésivité suffisante pour la stabilisation de l'article escamoté (13) par rapport à un déplacement involontaire, et une cohésion suffisante pour la prévention d'une dégradation du revêtement thermodurci viscoélastomère (3) lors de l'application d'une force de retrait à l'article escamoté (13).
